(19) Europäisches Patentamt
European Patent Office
Office européen des brevets

(11) **EP 4 783 037 A1**

(12) **EUROPEAN PATENT APPLICATION**
published in accordance with Art. 153(4) EPC

(43) Date of publication:
**29.07.2026   Bulletin 2026/31**

(21) Application number: **23953439.9**

(22) Date of filing: **26.09.2023**

(51) International Patent Classification (IPC):
***G06F 18/20*** *(2023.01)*

(52) Cooperative Patent Classification (CPC):
**G06F 18/20**

(86) International application number:
**PCT/CN2023/121735**

(87) International publication number:
**WO 2025/065281 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Yinwang Intelligent Technologies Co., Ltd.**
**Shenzhen, Guangdong 518110 (CN)**

(72) Inventors:
• **LIU, Jianqin**
  **Shenzhen, Guangdong 518129 (CN)**
• **WU, Yong**
  **Shenzhen, Guangdong 518129 (CN)**
• **HE, Yue**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR DETERMINING SCENE COMPLEXITY, AND METHOD AND APPARATUS FOR DETERMINING FUNCTIONAL COMPLEXITY OF AUTONOMOUS DRIVING SYSTEM**

(57)    A method and an apparatus for determining a scenario complexity degree and a function complexity degree of an autonomous driving system are disclosed. The method for determining the scenario complexity degree is used as an example. The method includes: determining description information of each of a plurality of scenario attributes of a driving scenario; determining a complexity degree of each of the plurality of scenario attributes based on first mapping information, where the first mapping information indicates a correspondence between the description information and the complexity degree; determining a weight of each of the plurality of scenario attributes; and obtaining a complexity degree of the driving scenario by performing weighted summation on complexity degrees of the plurality of scenario attributes based on weights. In this way, the complexity degree of the driving scenario can be appropriately and accurately assessed. This helps improve accuracy of a test result of an autonomous vehicle.

EP 4 783 037 A1

S301: Determine description information of each of a plurality of scenario attributes of a driving scenario

↓

S302: Determine a complexity degree of each of the plurality of scenario attributes based on mapping information 1, where the mapping information 1 indicates a correspondence between the description information and the complexity degree

↓

S303: Determine a weight of each of the plurality of scenario attributes, and obtain a complexity degree of the driving scenario by performing weighted summation on complexity degrees of the plurality of scenario attributes based on weights

FIG. 3

## Description

## TECHNICAL FIELD

This application relates to the field of intelligent driving, and in particular, to a method and an apparatus for determining a scenario complexity degree and a function complexity degree of an autonomous driving system.

## BACKGROUND

A test of an autonomous vehicle is affected by many factors, for example, a complexity degree of a driving scenario and a function complexity degree of an autonomous driving system. The complexity degree of the driving scenario may be used to guide design and selection of a driving scenario in evaluation of the autonomous vehicle. Performance of the autonomous driving system in driving scenarios with different complexity degrees may be detected based on the function complexity degree of the autonomous driving system. Therefore, improving accuracy of a test result of the autonomous vehicle is an urgent problem that needs to be resolved.

## SUMMARY

This application discloses a method and an apparatus for determining a scenario complexity degree, so as to appropriately and effectively assess a complexity degree of a driving scenario. This helps improve accuracy of assessing the complexity degree of the driving scenario, and improves accuracy of a test result of an autonomous vehicle.

According to a first aspect, this application provides a method for determining a scenario complexity degree. The method includes: determining description information of each of a plurality of scenario attributes of a driving scenario; determining a complexity degree of each of the plurality of scenario attributes based on first mapping information, where the first mapping information indicates a correspondence between the description information and the complexity degree; determining a weight of each of the plurality of scenario attributes; and obtaining a complexity degree of the driving scenario by performing weighted summation on complexity degrees of the plurality of scenario attributes based on weights.

For example, the description information may be a description of a status, a presentation form, or a type, or may be a value or a parameter range. This is not specifically limited herein.

For example, determining the description information of each of the plurality of scenario attributes of the driving scenario may be: obtaining the description information of each of the plurality of scenario attributes of the driving scenario.

Herein, the first mapping information is preconfigured. For example, the first mapping information may be configured by a related standard formulation person, an autonomous driving test person, or the like.

In the foregoing method, the complexity degree of the driving scenario is obtained by performing weighted summation on the complexity degrees of the plurality of scenario attributes in the driving scenario, and the complexity degree of each scenario attribute may be obtained by searching known mapping information based on the description information of the scenario attribute in the driving scenario. The mapping information indicates the correspondence between the description information and the complexity degree of the scenario attribute. In this way, calculation is simple, and further, assessment of the complexity degree of the driving scenario is accurate and appropriate.

Optionally, determining the weight of each of the plurality of scenario attributes includes: determining the weight of each of the plurality of scenario attributes based on second mapping information, where the second mapping information indicates a correspondence between the scenario attribute and the weight.

Herein, the second mapping information is also preset. For example, the second mapping information may be configured by the related standard formulation person or the autonomous driving test person.

In the foregoing implementation, the weight of the scenario attribute may be obtained by searching known mapping information based on the scenario attribute. The mapping information indicates the correspondence between the scenario attribute and the weight. This helps improve efficiency of assessing the complexity degree of the driving scenario.

Optionally, a sum of the weights of the plurality of scenario attributes is 1.

Optionally, the plurality of scenario attributes include a plurality of items of a road, weather, an environment, a host vehicle, and connectivity.

In the foregoing implementation, the complexity degree of the driving scenario is assessed from a plurality of dimensions of the road, the weather, the environment, the host vehicle, and the connectivity. This increases assessment dimensions, and makes assessment of the complexity degree of the driving scenario accurate and appropriate.

Optionally, the scenario attribute includes a first-level scenario attribute and a second-level scenario attribute. When the first-level scenario attribute is the road, the second-level scenario attribute is at least one of a road structure, a lane line, and a slope; when the first-level scenario attribute is the weather, the second-level scenario attribute includes a weather type; when the first-level scenario attribute is the environment, the second-level scenario attribute is at least one of a traffic sign, a temporary traffic event, a type of a traffic participant, and a quantity of traffic participants; when the first-level scenario attribute is the host vehicle, the second-level scenario attribute includes a host vehicle speed; and when the first-level scenario attribute is the connectivity, the second-level scenario attribute includes a connectivity information type.

Herein, the second-level scenario attribute is a subdivision of the first-level scenario attribute.

For example, when the first-level scenario attribute is the host vehicle, the second-level scenario attribute further includes at least one of a function status of the host vehicle, an occupant fatigue status of the host vehicle, and the like.

For example, in the first mapping information, description attributes of the road structure include: long straight road, curve, route, and special road (for example, a roundabout, a tunnel, or a ramp).

For example, description information of the lane line is related to at least one of whether the lane line exists, whether the lane line is worn or occluded, whether the lane line is regular, whether the lane line is covered, and the like. For example, in the first mapping information, the description information of the lane line includes: clear, worn or occluded, unclear due to water accumulation or ice coverage on a road surface, irregular, and absence of a lane line.

For example, in the first mapping information, description information of the slope includes two types of descriptions: presence of a slope and absence of a slope. Further, the presence of the slope may also be divided based on a slope range to which the slope belongs. This is not specifically limited herein.

For example, in the first mapping information, description information of the weather type includes daytime with good visibility, daytime with poor visibility, nighttime with good visibility, and nighttime with poor visibility. It can be learned that a configuration of the description information of the weather type is related to at least one of visibility, whether there is ambient light, whether it is nighttime, a current weather (for example, a sunny day, a rainy day, or dense fog), and the like.

Herein, the traffic sign may alternatively be understood as a traffic facility, a facility sign, or the like. This is not specifically limited. For example, a configuration of description information of the traffic sign is related to at least one of whether the traffic sign exists, whether the traffic sign is regular, whether the traffic sign is clear, whether the traffic sign is distant, whether the traffic sign is reflective or dirty, and the like.

For example, a configuration of description information of the temporary traffic condition is related to at least one of whether a temporary traffic event exists, whether the temporary traffic condition is maintained by a dedicated person, whether the temporary traffic event has large impact on driving, whether the temporary traffic event is highly occasional and difficult to predict, whether the temporary traffic event is a temporary traffic event indicated by a warning sign, and the like.

For example, a configuration of description information of the type of a traffic participant is related to at least one of whether a traffic participant exists in the driving scenario, an included traffic participant, whether a behavior of the traffic participant is standard, whether the traffic participant is common, and the like.

In the foregoing implementation, the road, the weather, the environment, the host vehicle, and the connectivity are used as first-level scenario attributes, and a plurality of first-level scenario attributes may be further subdivided to obtain a plurality of second-level scenario attributes. The complexity degree of the driving scenario is assessed based on the plurality of second-level scenario attributes, so that assessment is accurate.

Optionally, the weights of all the scenario attributes are the same, or the weight of the scenario attribute is associated with a degree of impact of the scenario attribute on the complexity degree of the driving scenario.

For example, that the weights of all the scenario attributes are the same may be that weights of all first-level scenario attributes are the same, or weights of all second-level scenario attributes are the same.

In the foregoing implementation, when the complexity degree of the driving scenario is assessed, degrees of impact of different scenario attributes on the complexity degree of the driving scenario are considered, so that the complexity degree of the driving scenario is appropriately and effectively assessed.

For example, the weight of the second-level scenario attribute is related to the weight of the first-level scenario attribute.

For example, when the first-level scenario attribute is A, if the second-level scenario attribute is only al, a weight of the second-level scenario attribute al is a weight of the first-level scenario attribute A; or if second-level scenario attributes include a1, a2, and a3, weights of the three second-level scenario attributes are obtained through allocation based on the weight of the first-level scenario attribute A. An allocation manner may be, for example, uniform allocation or another allocation manner. It may be understood that a sum of the weights of the three second-level scenario attributes a1, a2, and a3 is the weight of the first-level scenario attribute A.

In the foregoing implementation, the weight of the corresponding second-level scenario attribute is determined based on the weight of the first-level scenario attribute, so that impact of the first-level scenario attribute on the complexity degree of the driving scenario is fully considered.

This application further discloses a method and an apparatus for determining a function complexity degree of an autonomous driving system, to resolve a problem of inconsistent assessment of different autonomous driving systems, and implement appropriate and accurate assessment of the function complexity degree of the autonomous driving system, thereby helping improve accuracy of a test result of an autonomous vehicle.

According to a second aspect, this application provides a method for determining a function complexity degree of an autonomous driving system. The method includes: determining description information of each of a plurality of condition constraints of the autonomous driving system in a driving scenario; determining a complexity degree of each of the plurality of condition constraints based on first mapping information, where the first mapping information indicates a correspondence between the description information and the complexity degree; determining a weight of each of the plurality of condition constraints; and obtaining the function complexity degree of the autonomous driving system in the driving scenario by performing weighted summation on complexity degrees of the plurality of condition constraints based on weights.

Herein, the "autonomous driving system" is not limited to a fully autonomous driving system, a highly autonomous driving system, a conditionally autonomous driving system, a partially autonomous driving system, and the like. A person skilled in the art may understand that non-fully manual driving systems providing intelligent driving can all be covered under this concept.

Herein, the first mapping information is preconfigured. For example, the first mapping information may be configured by a related standard formulation person, an autonomous driving test person, or the like.

In the foregoing method, the function complexity degree of the autonomous driving system in the driving scenario is obtained by performing weighted summation on the complexity degrees of the plurality of condition constraints in the driving scenario. The plurality of condition constraints are shared by different autonomous driving systems. In addition, the complexity degree of each condition constraint may be obtained by searching known mapping information based on the description information of the condition constraint in the driving scenario. The mapping information indicates the correspondence between the description information and the complexity degree of the condition constraint. In this way, the function complexity degree of the autonomous driving system can be appropriately and accurately assessed. In addition, the assessment method can be applied to different autonomous driving systems, and also provides a reference for performance assessment of the different autonomous driving systems, thereby helping improve accuracy of a test result of an autonomous vehicle.

Optionally, determining the weight of each of the plurality of condition constraints includes: determining the weight of each of the plurality condition constraints based on second mapping information, where the second mapping information indicates a correspondence between the condition constraint and the weight.

Herein, the second mapping information is also preset. For example, the second mapping information may be configured by the related standard formulation person or the autonomous driving test person.

In the foregoing implementation, the weight of the condition constraint may be obtained by searching known mapping information based on the condition constraint. The mapping information indicates the correspondence between the condition constraint and the weight. This helps improve efficiency of assessing the function complexity degree of the autonomous driving system.

Optionally, a sum of the weights of the plurality of condition constraints is 1.

Optionally, the plurality of condition constraints include a plurality of items of an operational design domain ODD boundary constraint, a function activation condition constraint, a takeover condition constraint, an ODD dependency constraint, an ego vehicle constraint, an emergency response constraint, and a sensing function limitation constraint.

In the foregoing implementation, a function complexity degree of the autonomous driving system in any driving scenario is assessed from a plurality of dimensions of the ODD boundary constraint, the function activation condition constraint, the takeover condition constraint, the ODD dependency constraint, the ego vehicle constraint, the emergency response constraint, and the sensing function limitation constraint, so that the assessment dimensions are rich and comprehensive, and assessment accuracy is improved.

Optionally, the condition constraint includes a first-level condition constraint and a second-level condition constraint. When the first-level condition constraint is the operational design domain ODD boundary constraint, the second-level condition constraint includes an ODD boundary range; when the first-level condition constraint is the function activation condition constraint, the second-level condition constraint is at least one of a speed difference for a function and stable vehicle following time; when the first-level condition constraint is the takeover condition constraint, the second-level condition constraint includes a takeover time range; when the first-level condition constraint is the ODD dependency constraint, the second-level condition constraint is at least one of a speed difference in an ODD and a change in a lead vehicle; when the first-level condition constraint is the ego vehicle constraint, the second-level condition constraint is at least one of a host vehicle speed, an occupant fatigue status, and a vehicle function status; when the first-level condition constraint is the emergency response constraint, the second-level condition constraint includes automatic braking; and when the first-level condition constraint is the sensing function limitation constraint, the second-level condition constraint includes sensor detection.

Here, the second-level condition constraint is a subdivision of the first-level condition constraint.

For example, in the first mapping information, description information of the ODD boundary range includes three types of descriptions: within an ODD, at an ODD boundary, and outside an ODD.

For example, a configuration of description information of the speed difference for the function is related to whether a relative speed difference between two vehicles meets activation of the function of the autonomous driving system. For example, in the first mapping information, the description information of the speed difference for the function includes two types of descriptions: relative speed difference between two vehicles meeting activation of a function of an autonomous driving system and relative speed difference between two vehicles not meeting activation of a function of an autonomous driving system.

For example, a configuration of description information of the stable vehicle following time is related to whether stable vehicle following time required for activating the function of the autonomous driving system is met.

For example, a configuration of description information of the takeover time range is related to whether takeover occurs within the takeover time range. For example, in the first mapping information, the description information of the takeover time range includes two attributes: occurrence of takeover and non-occurrence of takeover.

For example, in the first mapping information, description information of the speed difference in the ODD includes two attributes: relative speed difference between two vehicles being within an ODD range and relative speed difference between two vehicles being not within an ODD range; and description information of the change in the lead vehicle includes two types of descriptions: non-occurrence of a change in a lead vehicle causing an exit from an ODD and occurrence of a change in a lead vehicle causing an exit from an ODD.

For example, in the first mapping information, description information of the automatic braking includes two types of descriptions: non-occurrence of automatic braking and occurrence of automatic braking.

For example, in the first mapping information, description information of the sensor detection includes three types of descriptions: normal, limited detection range, and unable to operate normally.

In the foregoing implementation, the ODD boundary constraint, the function activation condition constraint, the takeover condition constraint, the ODD dependency constraint, the ego vehicle constraint, the emergency response constraint, and the sensing function limitation constraint are used as first-level condition constraints. A plurality of first-level condition constraints may be further subdivided to obtain a plurality of second-level condition constraints. The function complexity degree of the autonomous driving system is assessed based on the plurality of second-level condition constraints, so that assessment is accurate. In addition, the method is not only applicable to assessment of a function complexity degree of an ODD-based autonomous driving system, but also applicable to assessment of a function complexity degree of an ODC-based autonomous driving system.

Optionally, the weights of all the condition constraints are the same, or the weight of the condition constraint is associated with a degree of impact of the condition constraint on the function complexity degree of the autonomous driving system.

For example, that the weights of all the condition constraints are the same may be that weights of all the first-level condition constraints are the same, or weights of all the second-level condition constraints are the same.

In the foregoing implementation, when the function complexity degree of the autonomous driving system is assessed, degrees of impact of different condition constraints in the driving scenario on the function complexity degree of the autonomous driving system are considered, so that the function complexity degree of the autonomous driving system is appropriately and effectively assessed.

Optionally, the weight of the second-level condition constraint is related to the weight of the first-level condition constraint.

For example, when the first-level condition constraint is B, if the second-level condition constraint is only b1, a weight of the second-level condition constraint b1 is a weight of the first-level condition constraint B; or if second-level condition constraints include b1, b2, and b3, weights of the three second-level condition constraints are obtained through allocation based on the weight of the first-level condition constraint B. An allocation manner may be, for example, uniform allocation or another allocation manner. In other words, a sum of the weights of the three second-level condition constraints b1, b2, and b3 is the weight of the first-level condition constraint B.

In the foregoing implementation, the weight of the corresponding second-level condition constraint is determined based on the weight of the first-level condition constraint, and impact of the first-level condition constraint on the function complexity degree of the autonomous driving system is fully considered.

According to a third aspect, this application provides an apparatus for determining a scenario complexity degree. The apparatus includes: an obtaining unit, configured to determine description information of each of a plurality of scenario attributes of a driving scenario; and a processing unit, configured to determine a complexity degree of each of the plurality of scenario attributes based on first mapping information. The first mapping information indicates a correspondence between the description information and the complexity degree. The processing unit is further configured to determine a weight of each of the plurality of scenario attributes, and the processing unit is further configured to obtain a complexity degree of the driving scenario by performing weighted summation on complexity degrees of the plurality of scenario attributes based on weights.

Optionally, the processing unit is specifically configured to determine the weight of each of the plurality of scenario attributes based on second mapping information, where the second mapping information indicates a correspondence between the scenario attribute and the weight.

Optionally, a sum of the weights of the plurality of scenario attributes is 1.

Optionally, the plurality of scenario attributes include a plurality of items of a road, weather, an environment, a host vehicle, and connectivity.

Optionally, the scenario attribute includes a first-level scenario attribute and a second-level scenario attribute. When the first-level scenario attribute is the road, the second-level scenario attribute is at least one of a road structure, a lane line, and a slope; when the first-level scenario attribute is the weather, the second-level scenario attribute includes a weather type; when the first-level scenario attribute is the environment, the second-level scenario attribute is at least one of a traffic sign, a temporary traffic event, a type of a traffic participant, and a quantity of traffic participants; when the first-level scenario attribute is the host vehicle, the second-level scenario attribute includes a host vehicle speed; and when the first-level scenario attribute is the connectivity, the second-level scenario attribute includes a connectivity information type.

Optionally, the weights of all the scenario attributes are the same, or the weight of the scenario attribute is associated with a degree of impact of the scenario attribute on the complexity degree of the driving scenario.

Optionally, the weight of the second-level scenario attribute is related to the weight of the first-level scenario attribute.

According to a fourth aspect, this application provides an apparatus for determining a function complexity degree of an autonomous driving system. The apparatus includes: an obtaining unit, configured to determine description information of each of a plurality of condition constraints of the autonomous driving system in a driving scenario; and a processing unit, configured to determine a complexity degree of each of the plurality of condition constraints based on first mapping information, where the first mapping information indicates a correspondence between the description information and the complexity degree. The processing unit is further configured to determine a weight of each of the plurality of condition constraints, and the processing unit is further configured to obtain the function complexity degree of the autonomous driving system in the driving scenario by performing weighted summation on complexity degrees of the plurality of condition constraints based on weights.

Optionally, the processing unit is specifically configured to determine the weight of each of the plurality of condition constraints based on second mapping information, where the second mapping information indicates a correspondence between the condition constraint and the weight.

Optionally, a sum of the weights of the plurality of condition constraints is 1.

Optionally, the plurality of condition constraints include a plurality of items of an operational design domain ODD boundary constraint, a function activation condition constraint, a takeover condition constraint, an ODD dependency constraint, an ego vehicle constraint, an emergency response constraint, and a sensing function limitation constraint.

Optionally, the condition constraint includes a first-level condition constraint and a second-level condition constraint. When the first-level condition constraint is the operational design domain ODD boundary constraint, the second-level condition constraint includes an ODD boundary range; when the first-level condition constraint is the function activation condition constraint, the second-level condition constraint is at least one of a speed difference for a function and stable vehicle following time; when the first-level condition constraint is the takeover condition constraint, the second-level condition constraint includes a takeover time range; when the first-level condition constraint is the ODD dependency constraint, the second-level condition constraint is at least one of a speed difference in an ODD and a change in a lead vehicle; when the first-level condition constraint is the ego vehicle constraint, the second-level condition constraint is at least one of a host vehicle speed, an occupant fatigue status, and a vehicle function status; when the first-level condition constraint is the emergency response constraint, the second-level condition constraint includes automatic braking; and when the first-level condition constraint is the sensing function limitation constraint, the second-level condition constraint includes sensor detection.

Optionally, the weights of all the condition constraints are the same, or the weight of the condition constraint is associated with a degree of impact of the condition constraint on the function complexity degree of the autonomous driving system.

Optionally, the weight of the second-level condition constraint is related to the weight of the first-level condition constraint.

According to a fifth aspect, this application provides an apparatus for determining a scenario complexity degree. The apparatus includes a processor and a memory. The memory is configured to store program instructions; and the processor invokes the program instructions in the memory, so that the apparatus performs the method in any one of the first aspect or the possible implementations of the first aspect.

According to a sixth aspect, this application provides an apparatus for determining a function complexity degree of an autonomous driving system. The apparatus includes a processor and a memory. The memory is configured to store program instructions, and the processor invokes the program instructions in the memory, so that the apparatus performs the method in any one of the second aspect or the possible implementations of the second aspect.

According to a seventh aspect, this application provides a vehicle. The vehicle includes the apparatus in any one of the third aspect or the possible implementations of the third aspect, or includes the apparatus in any one of the fourth aspect or the possible implementations of the fourth aspect, or includes the apparatus in at least one of the fifth aspect and the sixth aspect.

According to an eighth aspect, this application provides a computer-readable storage medium, including computer instructions. When the computer instructions are run by a processor, the method in any one of the first aspect or the possible implementations of the first aspect is implemented.

According to a ninth aspect, this application provides a computer program product. When the computer program product is executed by a processor, the method in any one of the first aspect or the possible embodiments of the first aspect is implemented, or the method in any one of the second aspect or the possible embodiments of the second aspect is implemented.

For example, the computer program product may be a software installation package.

**BRIEF DESCRIPTION OF DRAWINGS**

FIG. 1 is a diagram of an architecture of a communication system according to an embodiment of this application;

FIG. 2 is a diagram of a scenario complexity degree assessment framework according to an embodiment of this application;

FIG. 3 is a flowchart of a method for determining a scenario complexity degree according to an embodiment of this application;

FIG. 4A is a diagram of a driving scenario according to an embodiment of this application;

FIG. 4B is a diagram of another driving scenario according to an embodiment of this application;

FIG. 4C is a diagram of another driving scenario according to an embodiment of this application;

FIG. 5 is a diagram of an assessment framework for a function complexity degree of an autonomous driving system according to an embodiment of this application;

FIG. 6 is a flowchart of a method for determining a function complexity degree of an autonomous driving system according to an embodiment of this application;

FIG. 7 is a diagram of another driving scenario according to an embodiment of this application;

FIG. 8 is a diagram of a structure of a compute apparatus according to an embodiment of this application; and

FIG. 9 is a diagram of a structure of a compute device according to an embodiment of this application.

**DESCRIPTION OF EMBODIMENTS**

It should be noted that prefix words such as "first" and "second" are used in this application only to distinguish between different described objects, and do not constitute any limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether the "field" modified by "first" and the "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words for distinguishing between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

(1) Operational design domain ODD

The operational design domain (operational design domain, ODD) is an external environmental condition that is determined when an autonomous driving system is designed and that is applicable to operation of functions of the autonomous driving system. For example, a specified condition may include a geographical location, a road type, a speed range, weather, time, and national and local traffic laws and regulations. A highway pilot (Highway Pilot, HWP) control system is used as an example. The system recognizes that a vehicle is within a range of the ODD (for example, the vehicle is currently traveling on a highway, the weather is clear, the vehicle is at an appropriate speed, an illumination condition is good, and a global positioning system (global positioning system, GPS) signal is stable), and the HWP system continuously executes all the dynamic driving tasks after a driver confirms to activate the system.

(2) Operational design condition ODC

The operational design condition (operational design condition, ODC) is a general term of various conditions that are determined when an autonomous driving system is designed and that are applicable to operation of functions of the autonomous driving system, including an operational design domain ODD and an internal condition that is further to be met for safe startup and operation of the system, for example, a vehicle status, an occupant status, and another necessary condition, for example, a traffic condition and an operation condition.

ODDs of different autonomous driving systems are different. For example, in an autonomous driving system at a high speed, a system A can be started and operated only at daytime, and a system B can be started and operated at daytime and at a sunny night.

The vehicle status includes a vehicle speed and a function status, where the function status includes a software and hardware status. The vehicle speed includes an activation speed range, and whether the current autonomous driving system can be activated is determined based on the activation speed range. Before the safe startup and operation of the autonomous driving system, the vehicle status needs to meet a condition for the safe startup and operation of the autonomous driving system. For example, the autonomous driving system at the high speed needs to have a function self-check capability, and needs to perform function self-check before startup. A sensing function status, a positioning function status, and a computing function status need to meet a system design requirement.

Occupants include a driver/dynamic driving task support user and a passenger, and the occupant status includes a status attribute of monitoring the driver/dynamic driving task support user and the passenger. For example, whether the driver is fatigued, drives drunk, or wears a safety belt is monitored. In this way, whether the vehicle has a driving risk can be determined. For another example, whether the dynamic driving task support user is in a fatigue state, a drunk driving state, or the like is monitored, to determine whether the dynamic driving task support user can take over. For another example, whether the passenger has a behavior of attempting to seize an autonomous driving device is monitored, so that whether the current autonomous driving system can operate safely can be determined.

The following describes technical solutions of embodiments in this application with reference to accompanying drawings.

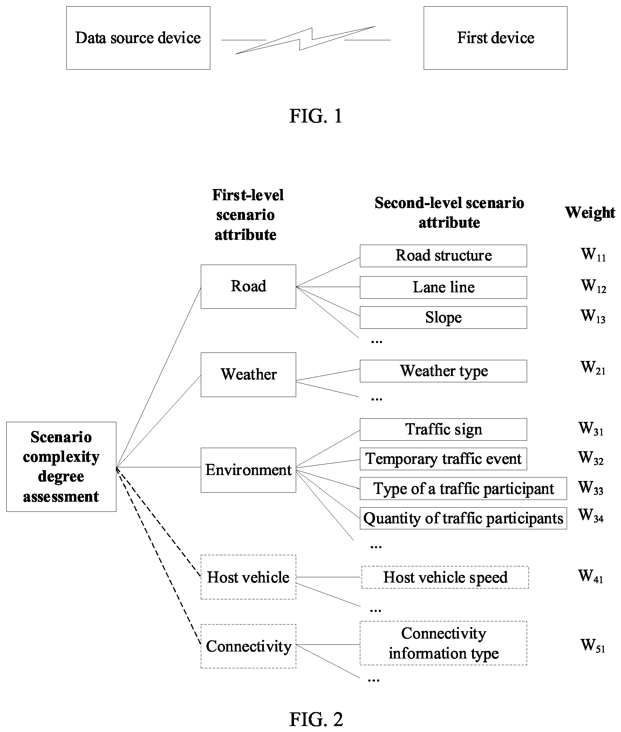

FIG. 1 is a diagram of an architecture of a communication system according to an embodiment of this application. The system is used to determine a complexity degree of a driving scenario and assess a function complexity degree of an autonomous driving system of a vehicle in any driving scenario. Herein, the "autonomous driving system" is not limited to a fully autonomous driving system, a highly autonomous driving system, a conditionally autonomous driving system, a partially autonomous driving system, and the like. A person skilled in the art may understand that non-fully manual driving systems providing intelligent driving can all be covered under this concept.

As shown in FIG. 1, the communication system includes a data source device and a first device. The data source device and the first device may be connected and communicate in a wireless manner or a wired manner.

Herein, the data source device may be an uncrewed aerial vehicle device, a data collection vehicle, a road side device, a surrounding vehicle, or the like that is configured with a collection apparatus. The road side device may be, for example, an apparatus like a road side unit (road side unit, RSU), multi-access edge computing (multi-access edge computing, MEC), or a sensor, or may be a component or a chip inside these apparatuses, or may be a system-level device including an RSU and MEC, or may be a system-level device including an RSU and a sensor, or may be a system-level device including an RSU, MEC, and a sensor.

Herein, the first device may be a network side device. The network side device may be, for example, a server (for example, a scenario assessment server or an autonomous driving system assessment server) deployed on a network side, or a component (for example, a component may be a chip or an integrated circuit) in the server, or a system-level device including a plurality of servers. The network side device may be deployed in a cloud environment or an edge environment. This is not specifically limited herein. When the first device is a network side device, data collected by the data source device may also be transferred to the network side device through a removable storage medium like a removable hard disk.

In some possible embodiments, the first device may alternatively be a vehicle or a component in a vehicle, and the component may be, for example, a chip or an integrated circuit. Herein, the vehicle is a vehicle configured with an autonomous driving system. In addition, depending on different power sources of the vehicle, the vehicle may be, for example, a new energy vehicle or a conventional vehicle. The conventional vehicle refers to a fuel vehicle, for example, may be a gasoline vehicle or a diesel vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

For example, the data source device is configured to collect data required for assessing a complexity degree of a driving scenario, for example, description information of a scenario attribute in the driving scenario and description information of a condition constraint of an autonomous driving system. In embodiments of this application, a quantity of data source devices is not limited, and there may be one or more data source devices.

In embodiments of this application, the description information may be a description of a status, a presentation form, or a type, or may be a value or a parameter range. This is not specifically limited herein.

In an implementation, the first device is configured to assess the complexity degree of the driving scenario. For example, the first device determines description information of each of a plurality of scenario attributes of the driving scenario; determines a complexity degree of each of the plurality of scenario attributes based on mapping information 1, where the mapping information 1 indicates a correspondence between the description information and the complexity degree; determines a weight of each of the plurality of scenario attributes; and obtains the complexity degree of the driving scenario by performing weighted summation on complexity degrees of the plurality of scenario attributes based on weights. For a specific process of assessing the complexity degree of the driving scenario, refer to related descriptions in the following embodiments. Details are not described herein again.

Herein, the driving scenario may be, for example, a vehicle cut-in scenario, a vehicle cut-out scenario, a vehicle following scenario, or a front vehicle braking scenario.

For example, the description information of the scenario attribute may be obtained by the first device from the data source device. The mapping information 1 may be pre-stored locally in the first device, or may be obtained by the first device from another device (for example, a cloud server). This is not specifically limited herein.

In another implementation, the first device may be further configured to assess a function complexity degree of the autonomous driving system of the vehicle in the driving scenario. For a specific process of assessing the function complexity degree of the autonomous driving system, refer to related descriptions in the following embodiments. Details are not described herein again.

The communication system shown in FIG. 1 may be applied to a plurality of network types, for example, applied to one or more of the following network types: SparkLink or NearLink (SparkLink or NearLink), a long term evolution (long term evolution, LTE) network, a fifth generation mobile communication technology (5th generation mobile communication technology, 5G), a wireless local area network (for example, Wi-Fi), Bluetooth (Bluetooth, BT), ZigBee (ZigBee), or a vehicle-mounted short-range wireless communication network.

Herein, the system architecture shown in FIG. 1 is merely an example, and a quantity of network elements included in the system shown in FIG. 1 is not limited. In addition, the method provided in this embodiment of this application may be applied to not only the system shown in FIG. 1, but also another system. For example, the communication system further includes a cloud server. The cloud server is, for example, configured to transmit the mapping information 1 to the first device, to assist the first device in assessing the complexity degree of the driving scenario and/or assessing the function complexity degree of the autonomous driving system.

Before the method for determining the scenario complexity degree provided in embodiments of this application is described, a scenario complexity degree assessment framework provided in an embodiment of this application is first described based on FIG. 2. FIG. 2 is a diagram of a scenario complexity degree assessment framework according to an embodiment of this application.

It can be learned from FIG. 2 that a plurality of scenario attributes used to assess a scenario complexity degree include a plurality of items of a road, weather, an environment, a host vehicle, and connectivity. To accurately assess a complexity degree of a driving scenario, the scenario attribute includes a first-level scenario attribute and a second-level scenario attribute. The second-level scenario attribute is a subdivision of the first-level scenario attribute.

For example, when the first-level scenario attribute is the road, the second-level scenario attribute is at least one of a road structure (Road Structure), a lane line (Lane Line), a slope (Slope), and the like. When the first-level scenario attribute is the weather, the second-level scenario attribute includes a weather type (Weather Type). When the first-level scenario attribute is the environment, the second-level scenario attribute is at least one of a traffic sign (Traffic Sign), a temporary traffic event (Temporary Traffic Event), a type of a traffic participant (Type of a Traffic Participant), and a quantity of traffic participants (quantity of Traffic Participants).

In embodiments of this application, a plurality of pieces of description information and a complexity degree corresponding to each piece of description information are preconfigured for each scenario attribute. Herein, a correspondence between the description information and the complexity degree may be stored as mapping information. For example, when description information of a scenario attribute 1 is a first description, a complexity degree of the scenario attribute 1 is a complexity degree corresponding to the first description. It may be understood that, for a same scenario attribute, different description information corresponds to different complexity degrees.

In an implementation, the plurality of scenario attributes include the road, the weather, and the environment.

An example in which the first-level scenario attribute is the road, and the second-level scenario attribute is the road structure, the lane line, and the slope is used to separately describe a correspondence between description information and a complexity degree of each second-level scenario attribute.

(1) Road structure

In an example, Table 1 shows a correspondence between preconfigured description information of a road structure and a complexity degree of the road structure. It can be learned from Table 1 that the "road structure" is configured with four types of description information: long straight road, curve, intersection, and special road. Herein, the special road includes but is not limited to a tunnel, a ramp, a roundabout, and the like. A complexity degree corresponding to the description information "Long straight road" of the road structure is 0.25, a complexity degree corresponding to the description information "Curve" of the road structure is 0.5, a complexity degree corresponding to the description information "Intersection" of the road structure is 0.75, and a complexity degree corresponding to the description information "Special road" of the road structure is 1. Herein, the description information of the road structure and a configuration of the complexity degree corresponding to the description information are not limited to those shown in Table 1.

Table 1

| Description information of a road structure | Complexity degree of the road structure |
|---|---|
| Long straight road | 0.25 |
| Curve | 0.5 |
| Intersection | 0.75 |
| Special road | 1 |

(2) Lane line

In an example, Table 2 shows a correspondence between preconfigured description information of a lane line and a complexity degree of the lane line. It can be learned from Table 2 that the "lane line" is configured with five types of description information: clear, worn or occluded, unclear due to water accumulation or ice coverage on a road surface, irregular, and absence of a lane line. A complexity degree corresponding to the description information "Clear" of the lane line is 0, a complexity degree corresponding to the description information "Worn or occluded" of the lane line is 0.25, a complexity degree corresponding to the description information "Unclear due to water accumulation or ice coverage on a road surface" of the lane line is 0.5, a complexity degree corresponding to the description information "Irregular" of the lane line is 0.75, and a complexity degree corresponding to the description information "Absence of a lane line" of the lane line is 1. Herein, the description information of the lane line and a configuration of the complexity degree corresponding to the description information are not limited to those shown in Table 2.

Table 2

| Description information of a lane line | Complexity degree of the lane line |
|---|---|
| Clear | 0 |
| Worn or occluded | 0.25 |
| Unclear due to water accumulation or ice coverage on a road surface | 0.5 |
| Irregular | 0.75 |
| Absence of a lane line | 1 |

(3) slope

In an example, Table 3 shows a correspondence between preconfigured description information of a slope and a complexity degree of the slope. It can be learned from Table 3 that the "slope" is configured with two types of description information: absence of a slope and presence of a slope. A complexity degree corresponding to the description information "Absence of a slope" of the slope is 0, and a complexity degree corresponding to the description information "Presence of a slope" of the slope is 1.

Table 3

| Description information of a slope | Complexity degree of the slope |
|---|---|
| Absence of a slope | 0 |
| Presence of a slope | 1 |

Herein, the description information of the slope and a configuration of the complexity degree corresponding to the description information are not limited to those shown in Table 2. For example, in some possible embodiments, the description information of the slope may alternatively be set based on a degree of inclination of the road relative to a horizontal line, and different degrees of inclination correspond to different complexity degrees.

It may be understood that, the road can be subdivided into only the three second-level scenario attributes: the road type structure, the lane line, and the slope.

An example in which the first-level scenario attribute is the weather and the second-level scenario attribute is the weather type is used for description. Table 4 shows a correspondence between preconfigured description information of a weather type and a complexity degree of the weather type. It can be learned from Table 4 that the "weather type" is configured with four types of description information: daytime with good visibility, daytime with poor visibility, nighttime with good visibility, and nighttime with poor visibility. A complexity degree corresponding to the description information "Daytime with good visibility" of the weather type is 0.25, a complexity degree corresponding to the description information "Daytime with poor visibility" of the weather type is 0.5, a complexity degree corresponding to the description information "Nighttime with good visibility" of the weather type is 0.75, and a complexity degree corresponding to the description information "Nighttime with poor visibility" of the weather type is 1.

Table 4

| Description information of a weather type | Complexity degree of the weather type |
|---|---|
| Daytime with good visibility | 0.25 |
| Daytime with poor visibility | 0.5 |
| Nighttime with good visibility | 0.75 |
| Nighttime with poor visibility | 1 |

Herein, the description information of the weather type and a configuration of the complexity degree corresponding to the description information are not limited to those shown in Table 4.

For example, in another implementation, the "weather type" is configured with five types of description information: sunny weather with high visibility, rainy or dusk conditions with moderate visibility, nighttime with ambient light, nighttime without ambient light, and heavy fog with extremely low visibility. A complexity degree corresponding to the description information "sunny weather with high visibility" of the weather type is 0, a complexity degree corresponding to the description information "rainy or dusk conditions with moderate visibility" of the weather type is 0.25, a complexity degree corresponding to the description information "nighttime with ambient light" of the weather type is 0.5, a complexity degree corresponding to the description information "nighttime without ambient light" of the weather type is 0.75, and a complexity degree corresponding to the description information "heavy fog with extremely low visibility" of the weather type is 1.

An example in which the first-level scenario attribute is the environment and the second-level scenario attribute is the traffic sign, the temporary traffic event, the type of the traffic participant, and the quantity of traffic participants is used to separately describe a correspondence between description information and a complexity degree that are configured for each second-level scenario attribute.

(1) Traffic sign

Herein, the traffic sign may alternatively be understood as a traffic facility, a facility sign, or the like. This is not specifically limited.

In an example, Table 5 shows a correspondence between preconfigured description information of a traffic sign and a complexity degree of the traffic sign. It can be learned from Table 4 that the "traffic sign" is configured with five types of description information: absence of a traffic sign, clear, distant, reflective/dirty, and irregular. A complexity degree corresponding to the description information "Absence of a traffic sign" of the traffic sign is 0, a complexity degree corresponding to the description information "Clear" of the traffic sign is 0.25, a complexity degree corresponding to the description information "Distant" of the traffic sign is 0.5, a complexity degree corresponding to the description information "Reflective/Dirty" of the traffic sign is 0.75, and a complexity degree corresponding to the description information "Irregular" of the traffic sign is 1. Herein, the description information of the traffic sign and a configuration of the complexity degree corresponding to the description information are not limited to those shown in Table 5.

Table 5

| Description information of a traffic sign | Complexity degree of the traffic sign |
| --- | --- |
| Absence of a traffic sign | 0 |
| Clear | 0.25 |
| Distant | 0.5 |
| Reflective/Dirty | 0.75 |
| Irregular | 1 |

(2) Temporary traffic event

In an example, Table 6 shows a correspondence between preconfigured description information of a temporary traffic event and a complexity degree of the temporary traffic event. It can be learned from Table 6 that the "temporary traffic event" is configured with five types of description information: absence of a temporary traffic event, maintenance by a dedicated person (for example, traffic control), presence of a warning sign (for example, road construction), great impact on driving (for example, a traffic accident), and high sporadicity and unpredictability (for example, stone falling or wheel detachment). A complexity degree corresponding to the description information "Absence of a temporary traffic event" of the temporary traffic event is 0, a complexity degree corresponding to the description information "Maintenance by a dedicated person" of the temporary traffic event is 0.25, a complexity degree corresponding to the description information "Presence of a warning sign" of the temporary traffic event is 0.5, a complexity degree corresponding to the description information "Great impact on driving" of the temporary traffic event is 0.75, and a complexity degree corresponding to the description information "High sporadicity and unpredictability" of the temporary traffic event is 1. Herein, the description information of the temporary traffic event and a configuration of complexity degree corresponding to the description information are not limited to those shown in Table 6.

Table 6

| Description information of a temporary traffic event | Complexity degree of the temporary traffic event |
| --- | --- |
| Absence of a temporary traffic event | 0 |
| Maintenance by a dedicated person | 0.25 |
| Presence of a warning sign | 0.5 |
| Great impact on driving | 0.75 |
| Temporary traffic event with high sporadicity and unpredictability | 1 |

(3) Type of a traffic participant

Herein, a road user may also be referred to as the traffic participant.

In an example, Table 7 shows a correspondence between preconfigured description information of a type of a traffic participant and complexity degree of the type of the traffic participant. It can be learned from Table 7 that the "type of the traffic participant" is configured with four types of description information. A complexity degree corresponding to description information "Only a motor vehicle is included" is 0.25, a complexity degree corresponding to description information "A motor vehicle, a pedestrian, or a non-motor vehicle located at a location specified in a regulation is included" is 0.5, a complexity degree corresponding to description information "A motor vehicle, a pedestrian, or a non-motor vehicle not located at a location specified in a regulation is included" is 0.75, and a complexity degree corresponding to description information "Uncommon traffic participant" is 1. For example, the uncommon traffic participant may be a pedestrian riding a horse, an animal crossing a road (for example, a horse, a cow, a sheep, or a deer), or the like.

Table 7

| Description information of a type of a traffic participant | Complexity degree of the type of the traffic participant |
|---|---|
| Only a motor vehicle is included | 0.25 |
| A motor vehicle, a pedestrian, or a non-motor vehicle located at a location specified in a regulation is included | 0.5 |
| A motor vehicle, a pedestrian, or a non-motor vehicle not located at a location specified in a regulation is included | 0.75 |
| Uncommon traffic participant | 1 |

Herein, the description information of the type of the traffic participant and a configuration of complexity degree corresponding to the description information are not limited to those shown in Table 7.

For example, in another implementation, the type of the traffic participant further includes description information "absence of a traffic participant", and a complexity degree corresponding to the description information "absence of a traffic participant" is 0.

(4) Quantity of traffic participants

In an example, Table 8 shows a correspondence between preconfigured description information of a quantity of traffic participants and a complexity degree of the quantity of traffic participants. It can be learned from Table 8 that the "quantity of traffic participants" is configured with three types of description information: less than 3, greater than or equal to 3 and less than or equal to 6, and greater than 6. A complexity degree corresponding to the description information "Less than 3" is 0, a complexity degree corresponding to the description information "Greater than or equal to 3 and less than or equal to 6" is 0.5, and a complexity degree corresponding to the description information "Greater than 6" is 1.

Table 8

| Description information of a quantity of traffic participants | Complexity degree of the quantity of traffic participants |
|---|---|
| Less than 3 | 0 |
| Greater than or equal to 3 and less than or equal to 6 | 0.5 |
| Greater than 6 | 1 |

Herein, the description information of the quantity of traffic participants and a configuration of the complexity degree corresponding to the description information are not limited to those shown in Table 8.

It may be understood that, the environment is not limited to be divided into only the four second-level scenario attributes: the traffic sign, the temporary traffic event, the type of the traffic participant, and the quantity of traffic participants.

In some possible embodiments, the plurality of scenario attributes further include at least one of the host vehicle and the connectivity.

In an implementation, when the first-level scenario attribute is the host vehicle, the second-level scenario attribute includes a host vehicle speed. In an example, normalization processing may be performed on a value of description information of the host vehicle speed based on a maximum speed specified in the regulation, to determine a complexity degree corresponding to the description information. For example, if the description information of the host vehicle speed is: 80 km/h, and the maximum speed specified in the regulation is 120 km/h, when the description information of the host vehicle speed is: 80 km/h, the complexity degree of the host vehicle speed is 0.67, that is, 80 is divided by 120.

In an implementation, when the first-level scenario attribute is the connectivity, the second-level scenario attribute includes a connectivity information type. In an example, the description information preconfigured for the connectivity information type and a complexity degree corresponding to the description information may be as follows. The connectivity information type may be classified into V2V (vehicle to vehicle), V2I (vehicle to infrastructure), V2P (vehicle to person), V2N (vehicle to network), and satellite positioning. When the description information of the connectivity information type is "One of V2V, V2I, V2P, V2N, and satellite positioning is included", a complexity degree of the network information type is 0.2. When the description information of the connectivity information type is "Two of V2V, V2I, V2P, V2N, and satellite positioning are included", a complexity degree of the network information type is 0.4. When the description information of the connectivity information type is "Three of V2V, V2I, V2P, V2N, and satellite positioning are included", a complexity degree of the network information type is 0.6. When the description information of the connectivity information type is "Four of V2V, V2I, V2P, V2N, and satellite positioning are included", a complexity degree of the network information type is 0.8. When the description information of the connectivity information type is "Five of V2V, V2I, V2P, V2N, and satellite positioning are included", a complexity degree of the network information type is 1.

In embodiments of this application, a weight is further configured for each scenario attribute used to assess the scenario complexity degree. A sum of weights of the plurality of scenario attributes is 1. When the scenario attribute includes the first-level scenario attribute and the second-level scenario attribute, each second-level scenario attribute also corresponds to a weight, and the weight of the second-level scenario attribute is related to a weight of the first-level scenario attribute. For example, it can be further learned from FIG. 2 that a weight of the road structure is $w_{11}$, a weight of the lane line is $w_{12}$, a weight of the slope is $w_{13}$, a weight of the weather type is $w_{21}$, ..., and the like, A weight of another second-level scenario attribute is specifically shown in FIG. 2. Details are not described herein again.

For example, a sum of weights of the plurality of second-level scenario attributes that participate in the scenario complexity degree assessment should be 1.

In an implementation, the complexity degree of the driving scenario is assessed from three dimensions: the road, the weather, and the environment. It is assumed that the first-level scenario attribute "road" is further subdivided into the foregoing second-level scenario attributes: the road structure, the lane line, and the slope. The weight of the road structure is denoted as $W_{RS}$, the weight of the lane line is denoted as $W_{LL}$, and the weight of the slope is denoted as $W_s$. The first-level scenario attribute "weather" is further subdivided into the foregoing second-level scenario attribute: the weather type. The weight of the weather type is denoted as $W_{WT}$. The first-level scenario attribute "environment" is further subdivided into the foregoing second-level scenario attributes: the traffic sign, the temporary traffic event, the type of the traffic participant, and the quantity of traffic participants. A weight of the traffic sign is denoted as $W_{TS}$, a weight of the temporary traffic event is denoted as $W_{TTE}$, a weight of the quantity of traffic participants is denoted as $W_{NTP}$, and a weight of the type of the traffic participant is denoted as $W_{TTP}$. A complexity degree of any driving scenario (for example, a driving scenario A) may be assessed based on the foregoing eight second-level scenario attributes, for example, the complexity degree of the driving scenario A may be obtained through calculation by using the following formula (1):

$$Soc_A = RS * W_{RS} + LL * W_{LL} + S * W_S + WT * W_{WT} + TS * W_{TS} + TTE * W_{TTE} + NTP * W_{NTP} + TTP * W_{TTP} \qquad \text{Formula (1).}$$

Herein, $Soc_A$ represents the complexity degree of the driving scenario A, RS represents description information of the "road structure" in the driving scenario A, LL represents description information of the "lane line" in the driving scenario A, $S$ represents description information of the "slope" in the driving scenario A, $WT$ represents description information of the "weather type" in the driving scenario A, $TS$ represents description information of the "traffic sign" in the driving scenario A, $TTE$ represents description information of the "temporary traffic event" in the driving scenario A, $NTP$ represents description information of the "quantity of traffic participants" in the driving scenario A, and $TTP$ represents description information of the "type of the traffic participant" in the driving scenario A. For the weights $W_{RS}$, $W_{LL}$, $W_S$, $W_{WT}$, $W_{TS}$, $W_{TTE}$, $W_{NTP}$, $W_{TTP}$, not described herein again.

In addition, in formula (1), a sum of the weights $W_{RS}$, $W_{LL}$, $W_S$, $W_{WT}$, $W_{TS}$, $W_{TTE}$, $W_{NTP}$, $W_{TTP}$ is 1.

Herein, the weight of the second-level scenario attribute is related to the weight of the first-level scenario attribute. It may be understood that the weight of the second-level scenario attribute is obtained based on weight allocation of the first-level scenario attribute.

For example, when the first-level scenario attribute is A, if the second-level scenario attribute is only al, a weight of the second-level scenario attribute al is a weight of the first-level scenario attribute A; or if second-level scenario attributes include a1, a2, and a3, weights of the three second-level scenario attributes are obtained through allocation based on the weight of the first-level scenario attribute A. An allocation manner may be, for example, uniform allocation or another allocation manner. It may be understood that a sum of the weights of the three second-level scenario attributes a1, a2, and a3 is the weight of the first-level scenario attribute A.

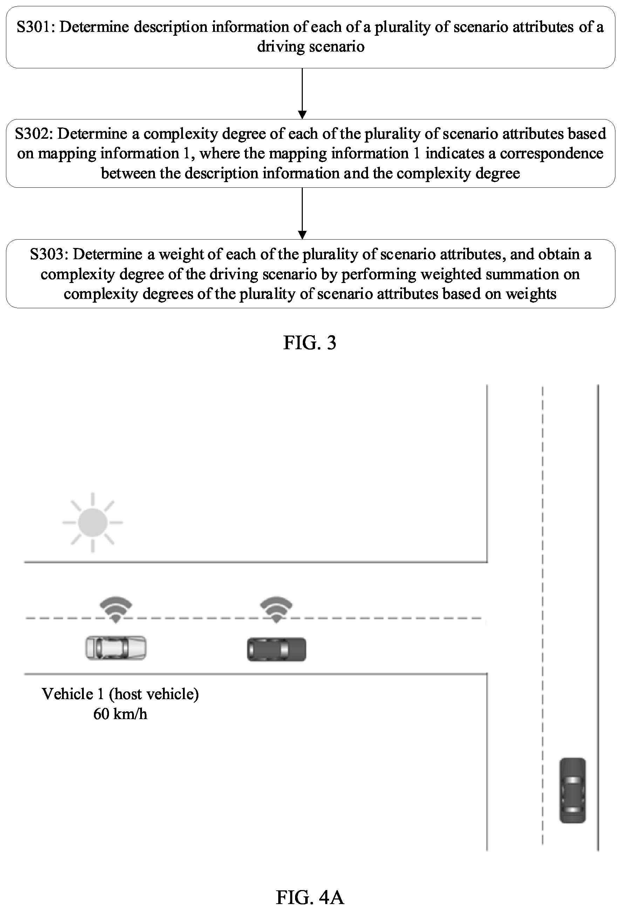

Based on the assessment framework shown in FIG. 2, FIG. 3 is a flowchart of a method for determining a scenario complexity degree according to an embodiment of this application. The method may be applied to the first device shown in FIG. 1. The method includes but is not limited to the following steps.

S301: Determine description information of each of a plurality of scenario attributes of a driving scenario.

For example, the plurality of scenario attributes include a plurality of items of a road, weather, an environment, a host vehicle, and connectivity.

In an implementation, the scenario attribute includes a first-level scenario attribute and a second-level scenario attribute. Herein, for a correspondence between the first-level scenario attribute and the second-level scenario attribute, refer to descriptions of corresponding content in FIG. 2. Details are not described herein again.

In an implementation, the description information of each scenario attribute may be obtained by the first device from at least one of data collection devices such as a road side device, a vehicle in the driving scenario, and an uncrewed aerial vehicle. It may be understood that when the scenario attribute includes the first-level scenario attribute and the second-level scenario attribute, determining the description information of each scenario attribute in the driving scenario is equivalent to determining description information of each second-level scenario attribute in the driving scenario.

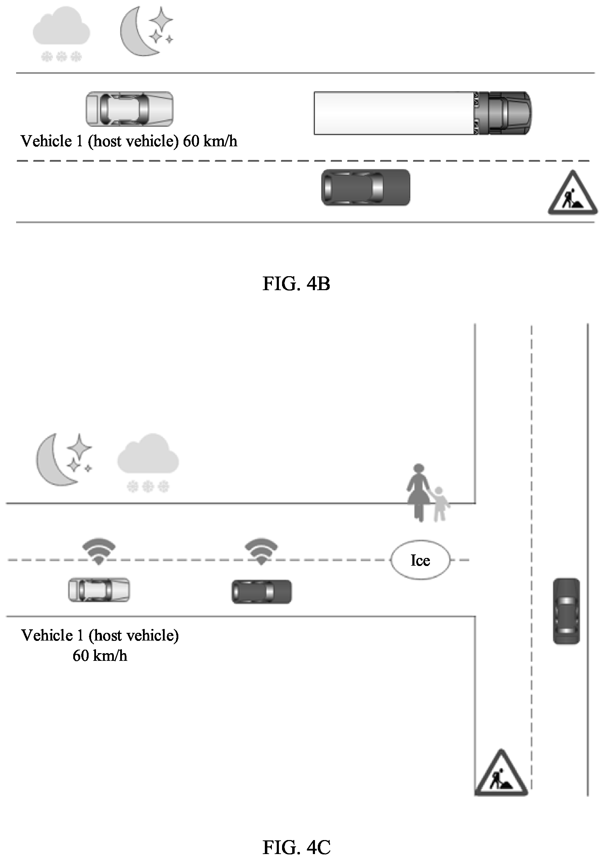

When the first-level scenario attribute includes the road, the weather, the environment, the host vehicle, and the connectivity, nine second-level scenario attributes are further used to assess complexity degrees of the driving scenarios shown in FIG. 4A, FIG. 4B, and FIG. 4C. The nine second-level scenario attributes include a road structure, a lane line, a slope, a weather type, a traffic sign, a temporary traffic event, a type of a traffic participant, a host vehicle speed, and a connectivity information type.

FIG. 4A is a diagram of a driving scenario according to an embodiment of this application. The driving scenario shown in FIG. 4A is a driving scenario 1. It is assumed that the first device determines that in the driving scenario 1, description information of the road structure is: intersection, description information of the lane line is: clear, description information of the slope is: absence of a slope, description information of the weather type is: daytime with good visibility, description information of the traffic sign is: absence of a traffic sign, description information of the temporary traffic event is: absence of a temporary traffic event, description information of the type of the traffic participant is: only a motor vehicle is included, description information of the host vehicle speed is: 60 km/h, and description information of the connectivity information type is: only at least one of V2V is included.

FIG. 4B is a diagram of another driving scenario according to an embodiment of this application. The driving scenario shown in FIG. 4B is a driving scenario 2. It is assumed that scenario description information 2 obtained by the first device indicates that in the driving scenario 2, description information of the road structure is: long straight road, description information of the lane line is: clear, description information of the slope is: absence of a slope, description information of the weather type is: nighttime without ambient light, description information of the traffic sign is: distant, description information of the temporary traffic event is: road construction, description information of the type of the traffic participant is: only a motor vehicle is included, description information of the host vehicle speed is: 60 km/h, and description information of the connectivity information type is: none is included.

FIG. 4C is a diagram of another driving scenario according to an embodiment of this application. The driving scenario shown in FIG. 4C is a driving scenario 3. It is assumed that scenario description information 3 obtained by the first device indicates that, in the driving scenario 3, description information of the road structure is: intersection, description information of the lane line is: unclear due to ice coverage on a road surface, description information of the slope is: absence of a slope, description information of the weather type is: nighttime with poor visibility, description information of the traffic sign is: distant, description information of the temporary traffic event is: road construction, description information of the type of the traffic participant is: a motor vehicle and a pedestrian are included but the pedestrian crosses the road, description information of the host vehicle speed is: 60 km/h, and description information of the connectivity information type is: only at least one of V2V is included.

S302: Determine a complexity degree of each of the plurality of scenario attributes based on mapping information 1, where the mapping information 1 indicates a correspondence between the description information and the complexity degree.

For example, the mapping information 1 includes the correspondences shown in Table 1 to Table 7. In some possible embodiments, the mapping information 1 further includes the correspondence shown in Table 8.

In an implementation, because the scenario attribute includes a first-level scenario attribute and a second-level scenario attribute, determining the complexity degree of each of the plurality of scenario attributes based on the mapping information 1 includes: determining a complexity degree of each of a plurality of second-level scenario attributes based on the mapping information 1. In this case, the mapping information 1 stores a correspondence between description information and the complexity degree of the second-level scenario attribute.

A second-level scenario attribute 1 is used as an example. Determining a complexity degree of the second-level scenario attribute 1 based on the mapping information 1 includes: determining target description information, closest to description information of the second-level scenario attribute 1 in the driving scenario, that is of the second-level scenario attribute 1 and that is in the mapping information 1, and using a complexity degree corresponding to the target description information of the second-level scenario attribute 1 in the mapping information 1 as the complexity degree of the second-level scenario attribute 1 in the driving scenario. In some possible embodiments, the description information of the second-level scenario attribute 1 in the driving scenario belongs to description information preconfigured for the second-level scenario attribute 1 in the mapping information 1. In this case, a complexity degree corresponding to the description information that is of the second-level scenario attribute 1 in the driving scenario and that is found in the mapping information 1 is used as the complexity degree of the second-level scenario attribute 1 in the driving scenario.

For example, in the driving scenario 2 shown in FIG. 4B, it is assumed that the second-level scenario attribute 1 is a temporary traffic event, and it can be learned from the description in FIG. 4B that the description information of the temporary traffic event is: road construction. It is determined, based on the configuration information that is of the temporary traffic event and that is shown in Table 6, that description information, closest to the description information "road construction", that is of the temporary traffic event and that is in Table 6 is "Presence of a warning sign". Therefore, in the driving scenario shown in FIG. 4B, the complexity degree of the second-level scenario attribute 1 "temporary traffic event" is the complexity degree corresponding to the description information "Presence of a warning sign", namely, 0.5.

For another example, in the driving scenario 2 shown in FIG. 4B, it is assumed that the second-level scenario attribute 1 is a road structure, and it can be learned from the description in FIG. 4B that the description information of the road structure is: long straight road. It is determined, based on the configuration information that is of the road structure and that is shown in Table 1, that the complexity degree of the second-level scenario attribute 1 "road structure" is the complexity degree corresponding to the description information "Long straight road" in Table 1, namely, 0.25.

For the driving scenario 1 shown in FIG. 4A, it may be determined, by using the foregoing method, that in the driving scenario 1, the complexity degree of the second-level scenario attribute "road structure" is 0.75, complexity degrees of the second-level scenario attributes "lane line", "slope", "weather type", "traffic sign", and "temporary traffic event" are all 0, the complexity degree of the second-level scenario attribute "type of a traffic participant" is 0.25, the complexity degree of the second-level scenario attribute "host vehicle speed" is 0.5, and the complexity degree of the second-level scenario attribute "connectivity information type" is 0.2.

For the driving scenario 2 shown in FIG. 4B, it may be determined, by using the foregoing method, that in the driving scenario 2, the complexity degree of the second-level scenario attribute "road structure" is 0.25, complexity degrees of the second-level scenario attributes "lane line", "slope", and "connectivity information type" are all 0, the complexity degree of the second-level scenario attribute "weather type" is 0.75, the complexity degree of the second-level scenario attribute "traffic sign" is 0.5, the complexity degree of the second-level scenario attribute "temporary traffic event" is 0.5, the complexity degree of the second-level scenario attribute "type of a traffic participant" is 0.25, and the complexity degree of the second-level scenario attribute "host vehicle speed" is 0.5.

For the driving scenario 3 shown in FIG. 4C, it may be determined, by using the foregoing method, that in the driving scenario 3, the complexity degree of the second-level scenario attribute "road structure" is 0.75, the complexity degree of the second-level scenario attribute "lane line" is 0.5, the complexity degree of the second-level scenario attribute "slope" is 0, the complexity degree of the second-level scenario attribute "weather type" is 0.75, the complexity degree of the second-level scenario attribute "traffic sign" is 0.5, the complexity degree of the second-level scenario attribute "temporary traffic event" is 0.75, the complexity degree of the second-level scenario attribute "type of a traffic participant" is 0.75, the complexity degree of the second-level scenario attribute "host vehicle speed" is 0.5, and the complexity degree of the second-level scenario attribute "connectivity information type" is 0.2.

S303: Determine a weight of each of the plurality of scenario attributes, and obtain a complexity degree of the driving scenario by performing weighted summation on complexity degrees of the plurality of scenario attributes based on weights.

A sum of the weights of the plurality of scenario attributes is 1.

In an implementation, determining the weight of each of the plurality of scenario attributes includes: determining the weight of each of the plurality of scenario attributes based on mapping information 2, where the mapping information 2 indicates a correspondence between the scenario attribute and the weight.

Further, because the scenario attribute includes the first-level scenario attribute and the second-level scenario attribute, determining the weight of each of the plurality of scenario attributes based on the mapping information 2 includes: determining a weight of each first-level scenario attribute based on the mapping information 2, and then determining a weight of each corresponding second-level scenario attribute based on the weight of each first-level scenario attribute. In this case, the mapping information 2 stores a correspondence between the first-level scenario attribute and the weight. It may be understood that a sum of weights of a plurality of second-level scenario attributes corresponding to a plurality of first-level scenario attributes is 1.

In some possible embodiments, the mapping information 2 may alternatively store a correspondence between the second-level scenario attribute and the weight. In this case, the weight of each second-level scenario may be directly determined based on the mapping information 2. Alternatively, the mapping information 2 stores both the correspondence between the first-level scenario attribute and the weight and the correspondence between the second-level scenario attribute and the weight. This is not specifically limited herein.

In an implementation, the weight of the second-level scenario attribute is obtained based on a weight of a first-level scenario attribute corresponding to the second-level scenario attribute.

In an implementation, weights of all second-level scenario attributes are the same, or the weight of the second-level scenario attribute is associated with a degree of impact of the second-level scenario attribute on the complexity degree of the driving scenario.

For example, the weights of the plurality of second-level scenario attributes may be allocated in any one of the following manners:

uniform allocation; or
non-uniform allocation performed based on degrees of impact of the plurality of first-level scenario attributes on the complexity degree of the driving scenario.

It is assumed that the plurality of first-level scenario attributes include a road, weather, an environment, a host vehicle, and connectivity, to describe the two weight allocation manners.

Method 1: Uniform allocation

To be specific, weights of the five first-level scenario attributes, namely, the road, the weather, the environment, the host vehicle, and the connectivity, are all . Further, in FIG. 2, weights of the three second-level scenario attributes, namely, the road structure, the lane line, and the slope, are obtained through allocation based on the weight of the corresponding first-level scenario attribute "road", for example, $w_{11} = w_{12} = w_{13} = \frac{1}{15}$. The weight of the second-level scenario attribute "weather type" is the weight of the first-level scenario attribute "weather", therefore, $w_{21} = \frac{1}{5}$. It is assumed that when the first-level scenario attribute is the environment, the second-level scenario attributes are the traffic sign, the temporary traffic event, and the type of the traffic participant. In this case, weights of the three second-level scenario attributes, namely, the traffic sign, the temporary traffic event, and the type of the traffic participant, are obtained through allocation based on the weight of the first-level scenario attribute "environment", for example, $w_{31} = w_{32} = w_{33} = \frac{1}{15}$. The weight of the second-level scenario attribute "host vehicle speed" is $w_{41} = \frac{1}{5}$ and the weight of the second-level scenario attribute "connectivity information type" is $w_{51} = \frac{1}{5}$.

In this case, based on the determined weights, weighted summation is performed on the complexity degrees that are of the second-level scenario attributes in the driving scenario 1 and that are determined in S302, and the complexity degree of the driving scenario 1 is obtained as 0.21; weighted summation is performed on the complexity degrees that are of the second-level scenario attributes in the driving scenario 2 and that are determined in S302, and the complexity degree of the driving scenario 2 is obtained as 0.35; and weighted summation is performed on the complexity degrees that are of the second-level scenario attributes in the driving scenario 3 and that are determined in S302, and the complexity degree of the driving scenario 3 is obtained as 0.49.

Method 2: Non-uniform allocation

For example, the weights that are of the plurality of first-level scenario attributes and that are determined based on the degrees of impact of the plurality of first-level scenario attributes on the complexity degree of the driving scenario should meet the following condition: the weight of the environment > the weight of the road > the weight of the weather > the weight of the host vehicle > the weight of the connectivity. A group of values of the weights of the five first-level scenario attributes are, for example, $\left\{ \frac{15}{45}, \frac{12}{45}, \frac{9}{45}, \frac{6}{45}, \frac{3}{45} \right\}$. Further, in FIG. 2, the weights of the three second-level scenario attributes, namely, the road structure, the lane line, and the slope, are obtained through allocation based on the weight $\frac{12}{45}$ of the first-level scenario attribute "road", for example, $w_{11} = w_{12} = w_{13} = \frac{4}{45}$. The weight of the second-level scenario attribute "weather type" is the weight of the first-level scenario attribute "weather", therefore $w_{21} = \frac{9}{45} = \frac{1}{5}$. It is assumed that when the first-level scenario attribute is the environment, three second-level scenario attributes are the traffic sign, the temporary traffic event, and the type of the traffic participant. In this case, weights of the three second-level scenario attributes, namely, the traffic sign, the temporary traffic event, and the type of the traffic participant, are obtained through allocation based on the weight $\frac{15}{45}$ of the first-level scenario attribute "environment", for example, $w_{31} = w_{32} = w_{33} = \frac{5}{45} = \frac{1}{9}$. The weight of the second-level scenario attribute "host vehicle speed" is $\frac{6}{45} = \frac{2}{15}$, and the weight of the second-level scenario attribute "connectivity information type" is $w_{51} = \frac{3}{45} = \frac{1}{15}$.

In this case, based on the determined weights, weighted summation is performed on the complexity degrees that are of the second-level scenario attributes in the driving scenario 1 and that are determined in S302, and the complexity degree of the driving scenario 1 is obtained as 0.17; weighted summation is performed on the complexity degrees that are of the second-level scenario attributes in the driving scenario 2 and that are determined in S302, and the complexity degree of the driving scenario 2 is obtained as 0.5; and weighted summation is performed on the complexity degrees that are of the second-level scenario attributes in the driving scenario 3 and that are determined in S302, and the complexity degree of the driving scenario 3 is obtained as 0.54.

It can be learned that, in an implementation of embodiments of this application, the complexity degree of the scenario is assessed through classification and subdivision in at least three dimensions: the road, the weather, and the environment, so that the complexity degree of the driving scenario can be appropriately and effectively assessed, and accuracy of assessing the complexity degree of the driving scenario can be improved. In addition, the complexity degree that is of the driving scenario and that is obtained in the foregoing manner may provide a reference for formulating an admission-oriented baseline.

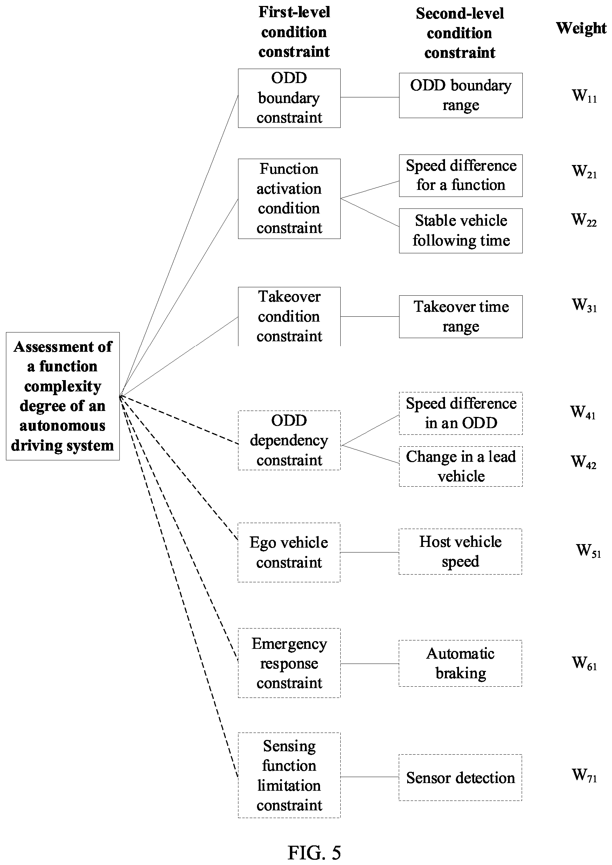

In some possible embodiments, an embodiment of this application further provides an assessment framework for a function complexity degree of an autonomous driving system of a vehicle. FIG. 5 is a diagram of an assessment framework for a function complexity degree of an autonomous driving system according to an embodiment of this application.

It can be learned from FIG. 5 that a plurality of condition constraints used to assess the function complexity degree of the autonomous driving system include a plurality of items of an ODD boundary constraint, a function activation condition constraint, a takeover condition constraint, an ODD dependency constraint, an ego vehicle constraint, an emergency response constraint, and a sensing function limitation constraint. To accurately assess the function complexity degree of the autonomous driving system, the condition constraint includes a first-level condition constraint and a second-level condition constraint. The second-level condition constraint is a subdivision of the first-level condition constraint.

For example, when the first-level condition constraint is the ODD boundary constraint, the second-level condition constraint includes an ODD boundary range. When the first-level condition constraint is the function activation condition constraint, the second-level condition constraint is at least one of a speed difference for a function and stable vehicle following time; when the first-level condition constraint is the takeover condition constraint, the second-level condition constraint includes a takeover time range; when the first-level condition constraint is the ODD dependency constraint, the second-level condition constraint is at least one of a speed difference in an ODD and a change in a lead vehicle; when the first-level condition constraint is the ego vehicle constraint, the second-level condition constraint is at least one of a host vehicle speed, an occupant fatigue status, and a vehicle function status; when the first-level condition constraint is the emergency response constraint, the second-level condition constraint includes automatic braking; and when the first-level condition constraint is the sensing function limitation constraint, the second-level condition constraint includes sensor detection.

In embodiments of this application, a plurality of pieces of description information and a complexity degree corresponding to each piece of description information are preconfigured for each condition constraint. Herein, a correspondence between the description information and the complexity degree of the condition constraint may be stored as mapping information. For example, when description information of a condition constraint 1 is a second description, a complexity degree of the condition constraint 1 is a complexity degree corresponding to the second description. Herein, the condition constraint 1 may be a first-level condition constraint, or may be a second-level condition constraint. This is not specifically limited herein. It may be understood that, for a same condition constraint, different description information corresponds to different complexity degrees.

In an implementation, the plurality of condition constraints include the ODD boundary constraint, the function activation condition constraint, and the takeover condition constraint.

In an implementation, if the first-level condition constraint is the ODD boundary constraint, the second-level condition constraint includes the ODD boundary range. In an example, Table 9 shows a correspondence between preconfigured description information of an ODD boundary range and a complexity degree of the ODD boundary range. It can be learned from Table 9 that, the "ODD boundary range" is configured with three types of description information: within an ODD, at an ODD boundary, and outside an ODD. When the description information of the ODD boundary range is "Within an ODD", a complexity degree corresponding to the ODD boundary range is 0; when the description information of the ODD boundary range is "At an ODD boundary", a complexity degree corresponding to the ODD boundary range is 0.5; and when the description information of the ODD boundary range is "Outside an ODD", a complexity degree corresponding to the ODD boundary range is 1.

Table 9

| Description information of an ODD boundary range | Complexity degree of the ODD boundary range |
|---|---|
| Within an ODD | 0 |
| At an ODD boundary | 0.5 |
| Outside an ODD | 1 |

Herein, the description information of the ODD boundary range and a configuration of the complexity degree corresponding to the description information are not limited to those shown in Table 9.

In an implementation, an example in which the first-level condition constraint is the function activation condition constraint, and second-level condition constraints are the speed difference for the function and the stable vehicle following time is used to separately describe the correspondence between the description information and the complexity degree that are configured for each second-level condition constraint.

(1) Speed difference for the function

In an example, Table 10 shows a correspondence between preconfigured description information of the speed difference for the function and a complexity degree of the speed difference for the function. It can be learned from Table 10 that the "speed difference for the function" is configured with two types of description information: relative speed difference between two vehicles meeting activation of a function of an autonomous driving system and relative speed difference between two vehicles not meeting activation of a function of an autonomous driving system. When the description information of the speed difference for the function is "Relative speed difference between two vehicles meeting activation of a function of an autonomous driving system", a complexity degree corresponding to the speed difference for the function is 0. When the description information of the speed difference for the function is "Relative speed difference between two vehicles not meeting activation of a function of an autonomous driving system", a complexity degree corresponding to the speed difference for the function is 1.

Table 10

| Description information of a speed difference for a function | Complexity degree of the speed difference for the function |
|---|---|
| Relative speed difference between two vehicles meeting activation of a function of an autonomous driving system | 0 |
| Relative speed difference between two vehicles not meeting activation of a function of an autonomous driving system | 1 |

Herein, the description information of the speed difference for the function and a configuration of the complexity degree corresponding to the description information are not limited to those shown in Table 10.

(2) Stable vehicle following time

In an example, Table 11 shows a correspondence between preconfigured description information of the stable vehicle following time and a complexity degree of the stable vehicle following time. It can be learned from Table 11 that, the "stable vehicle following time" is configured with two types of description information: stable vehicle following time meeting activation of a function of an autonomous driving system and stable vehicle following time not meeting activation of a function of an autonomous driving system. When the description information of the stable vehicle following time is "Stable vehicle following time meeting activation of a function of an autonomous driving system", a complexity degree corresponding to the stable vehicle following time is 0. When the description information of the stable vehicle following time is "Stable vehicle following time not meeting activation of a function of an autonomous driving system", a complexity degree corresponding to the stable vehicle following time is 1.

Table 11

| Description information of stable vehicle following time | Complexity degree of the stable vehicle following time |
|---|---|
| Stable vehicle following time meeting activation of a function of an autonomous driving system | 0 |
| Stable vehicle following time not meeting activation of a function of an autonomous driving system | 1 |

Herein, the description information of the stable vehicle following time and a configuration of the complexity degree corresponding to the description information are not limited to those shown in Table 11.

In an implementation, if the first-level condition constraint is the takeover condition constraint, the second-level condition constraint includes the takeover time range. In an example, Table 12 shows a correspondence between preconfigured description information of the takeover time range and a complexity degree of the takeover time range. It can be learned from Table 12 that, the "takeover time range" is configured with two types of description information: occurrence of takeover and non-occurrence of takeover. When the description information of the takeover time range is "Occurrence of takeover", a complexity degree corresponding to the takeover time range is 0. When the description information of the takeover time range is "Non-occurrence of takeover", a complexity degree corresponding to the takeover time range is 1.

Table 12

| Description information of a takeover time range | Complexity degree of the takeover time range |
|---|---|
| Occurrence of takeover | 0 |
| Non-occurrence of takeover | 1 |

Herein, the description information of the takeover time range and a configuration of the complexity degree corresponding to the description information are not limited to those shown in Table 12.

In some possible embodiments, the plurality of condition constraints further include at least one of the ODD dependency constraint, the ego vehicle constraint, the emergency response constraint, the sensing function limitation constraint, and the like.

In an implementation, an example in which the first-level condition constraint is the ODD dependency constraint, and second-level condition constraints include the speed difference in the ODD and the change in the lead vehicle is used to separately describe the correspondence between the description information and the complexity degree that are configured for each second-level condition constraint.

(1) Speed difference in the ODD

In an example, Table 13 shows a correspondence between preconfigured description information of the speed difference in the ODD and a complexity degree of the speed difference in the ODD. It can be learned from Table 13 that, the "speed difference in the ODD" is configured with two types of description information: relative speed difference between two vehicles being within an ODD range and relative speed difference between two vehicles being not within an ODD range. When the description information of the speed difference in the ODD is "Relative speed difference between two vehicles being within an ODD range", a complexity degree corresponding to the speed difference in the ODD is 0. When the description information of the speed difference in the ODD is "Relative speed difference between two vehicles being not within an ODD range", a complexity degree corresponding to the speed difference in the ODD is 1. Herein, the description information of the speed difference in the ODD and a configuration of the complexity degree corresponding to the description information are not limited to those shown in Table 13.

Table 13

| Description information of a speed difference in an ODD | Complexity degree of the speed difference in the ODD |
|---|---|
| Relative speed difference between two vehicles being within an ODD range | 0 |
| Relative speed difference between two vehicles being not within an ODD range | 1 |

(2) Change in the lead vehicle

In an example, Table 14 shows a correspondence between preconfigured description information of the change in the lead vehicle and a complexity degree of the change in the lead vehicle. It can be learned from Table 14 that the "change in the lead vehicle" is configured with two types of description information: relative speed difference between two vehicles being within an ODD range and relative speed difference between two vehicles being not within an ODD range. When the description information of the change in the lead vehicle is "Non-occurrence of a change in a lead vehicle causing an exit from an ODD", a complexity degree corresponding to the change in the lead vehicle is 0. When the description information of the change in the lead vehicle is "Occurrence of a change in a lead vehicle causing an exit from an ODD", a complexity degree corresponding to the change in the lead vehicle is 1. Herein, the description information of the change in the lead vehicle and a configuration of the complexity degree corresponding to the description information are not limited to those shown in Table 14.

Table 14

| Description information of a change in a lead vehicle | Complexity degree of the change in the lead vehicle |
|---|---|
| Non-occurrence of a change in a lead vehicle causing an exit from an ODD | 0 |
| Occurrence of a change in a lead vehicle causing an exit from an ODD | 1 |

In an implementation, if the first-level condition constraint is the ego vehicle constraint, the second-level condition constraint includes the host vehicle speed. In an example, Table 15 shows a correspondence between preconfigured description information of the host vehicle speed and a complexity degree of the host vehicle speed. It can be learned from Table 15 that, the "host vehicle speed" is configured with two types of description information: meeting a limit on an ego vehicle speed and not meeting a limit on an ego vehicle speed. When the description information of the host vehicle speed is "Meeting a limit on an ego vehicle speed", a complexity degree corresponding to the host vehicle speed is 0. When the description information of the host vehicle speed is "Not meeting a limit on an ego vehicle speed", a complexity degree corresponding to the host vehicle speed is 1. Herein, the description information of the host vehicle speed and a configuration of the complexity degree corresponding to the description information are not limited to those shown in Table 15.

Table 15

| Description information of a host vehicle speed | Complexity degree of the host vehicle speed |
|---|---|
| Meeting a limit on an ego vehicle speed | 0 |
| Not meeting a limit on an ego vehicle speed | 1 |

In some possible embodiments, when the first-level condition constraint is the ego vehicle constraint, the second-level condition constraint further includes at least one of two second-level condition constraints: the occupant fatigue status and the vehicle function status. In this case, a function complexity degree of the autonomous driving system can be assessed based on the ODC. For example, the second-level condition constraint is the occupant fatigue status. When the description information of the occupant fatigue status is "Not fatigued", a complexity degree corresponding to the occupant fatigue status may be set to 0. When the description information of the occupant fatigue status is "Fatigued", a complexity degree corresponding to the occupant fatigue status may be set to 1.

In an implementation, if the first-level condition constraint is the emergency response constraint, the second-level condition constraint includes the automatic braking. In an example, Table 16 shows a correspondence between preconfigured description information of the automatic braking and a complexity degree of the automatic braking. It can be learned from Table 16 that, the "automatic braking" is configured with two types of description information: non-occurrence of automatic braking and occurrence of automatic braking. When the description information of the automatic braking is "Non-occurrence of automatic braking", a complexity degree corresponding to the automatic braking is 0. When the description information of the automatic braking is "Occurrence of automatic braking", a complexity degree corresponding to the automatic braking is 1. Herein, the description information of the automatic braking and a configuration of the complexity degree corresponding to the description information are not limited to those shown in Table 16.

Table 16

| Description information of automatic braking | Complexity degree of the automatic braking |
|---|---|
| Non-occurrence of automatic braking | 0 |
| Occurrence of automatic braking | 1 |

In an implementation, if the first-level condition constraint is the sensing function limitation constraint, the second-level condition constraint includes the sensor detection. In an example, Table 17 shows a correspondence between preconfigured description information of the sensor detection and a complexity degree of the sensor detection. It can be learned from Table 17 that, the second-level condition constraint, namely, the sensor detection, is configured with three types of description information: normal, limited detection range, and unable to operate normally. When the description information of the sensor detection is "Normal", a complexity degree corresponding to the sensor detection is 0. When the description information of the sensor detection is "Limited detection range", a complexity degree corresponding to the sensor detection 0.5. When the description information of the sensor detection is "Unable to operate normally", a complexity degree corresponding to the sensor detection is 1. Herein, the description information of the sensor detection and a configuration of the complexity degree corresponding to the description information are not limited to those shown in Table 17.

Table 17

| Description information of sensor detection | Complexity degree of the sensor detection |
| --- | --- |
| Normal | 0 |
| Limited detection range | 0.5 |
| Unable to operate normally | 1 |

In embodiments of this application, a weight is further configured for each condition constraint used to assess the function complexity degree of the autonomous driving system. A sum of weights of the plurality of condition constraints is 1. When the condition constraint includes the first-level condition constraint and the second-level condition constraint, each second-level condition constraint corresponds to a weight, and the weight of the second-level condition constraint is related to a weight of the first-level condition constraint. For example, it can be further learned from FIG. 5 that, a weight of the ODD boundary range is $w_{11}$, a weight of the speed difference for the function is $w_{21}$, a weight of the stable vehicle following time is $w_{22}$, and a weight of the takeover time range is $w_{31}$, ..., and the like. For details of a weight of another second-level condition constraint, refer to FIG. 5. Details are not described herein again.

For example, a sum of weights of the plurality of second-level condition constraints participating in assessment of the function complexity degree of the autonomous driving system should be 1.

In an implementation, the weight of each second-level condition constraint is related to a weight of a first-level condition constraint corresponding to the second-level condition constraint.

For example, when the first-level condition constraint is B, if the second-level condition constraint is only b1, a weight of the second-level condition constraint b1 is a weight of the first-level condition constraint B; or if second-level condition constraints include b1, b2, and b3, weights of the three second-level condition constraints are obtained through allocation based on the weight of the first-level condition constraint B. An allocation manner may be, for example, uniform allocation or another allocation manner. In other words, a sum of the weights of the three second-level condition constraints b1, b2, and b3 is the weight of the first-level condition constraint B.

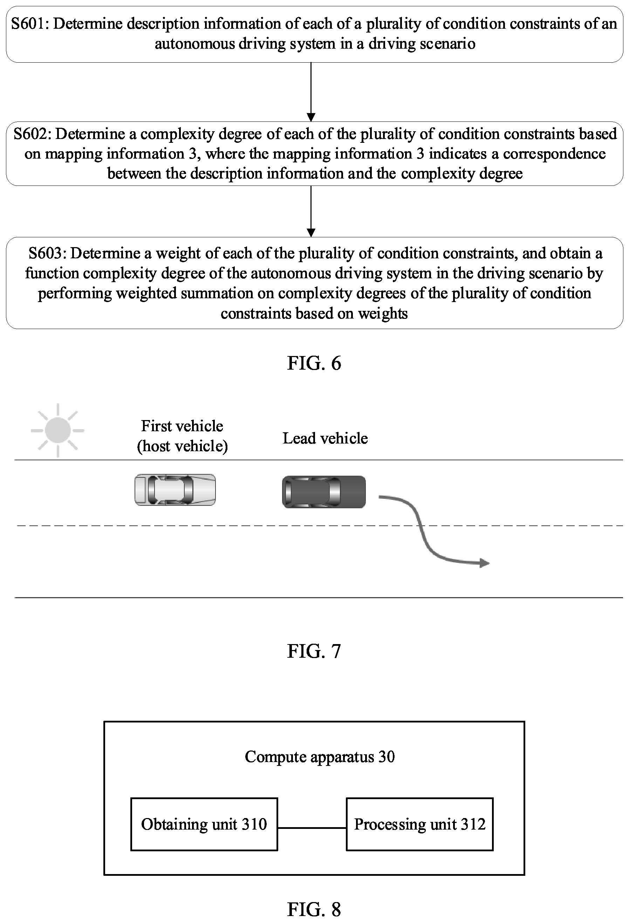

FIG. 6 is a flowchart of a method for determining a function complexity degree of an autonomous driving system according to an embodiment of this application. The method may be applied to the first device shown in FIG. 1. The solution is described by using an example in which the first device assesses a function complexity degree of an autonomous driving system of a first vehicle in a driving scenario. The first vehicle is a host vehicle, and the autonomous driving system is configured in the first vehicle. Correspondingly, the first device may be the first vehicle or a component in the first vehicle, or may be a network side device independent of the first vehicle or a component in a network side device. The component may be, for example, a chip or an integrated circuit. This is not specifically limited herein. The method includes but is not limited to the following steps.

S601: Determine description information of each of a plurality of condition constraints of the autonomous driving system in a driving scenario.

Herein, the autonomous driving system is not limited to a fully autonomous driving system, a highly autonomous driving system, a conditionally autonomous driving system, a partially autonomous driving system, and the like. A person skilled in the art may understand that non-fully manual driving systems providing intelligent driving can all be covered under this concept.

For example, the plurality of condition constraints include a plurality of items of an ODD boundary constraint, a function activation condition constraint, a takeover condition constraint, an ODD dependency constraint, an ego vehicle constraint, an emergency response constraint, and a sensing function limitation constraint.

In an implementation, the condition constraint includes a first-level condition constraint and a second-level condition constraint. Herein, for a correspondence between the first-level condition constraint and the second-level condition constraint, refer to the description of corresponding content in FIG. 5. Details are not described herein again.

In an implementation, when the first device is the first vehicle, the description information of each condition constraint of the autonomous driving system in the driving scenario may be locally obtained by the first device. When the first device is the network side device independent of the first vehicle, obtaining system description information of the first vehicle is receiving the system description information from the first vehicle. In some possible embodiments, the description information of each condition constraint may be from the first vehicle, or may be partially from a road side device, a vehicle around the first vehicle, or the like.

It may be understood that when the condition constraint includes the first-level condition constraint and the second-level condition constraint, determining the description information of each condition constraint of the autonomous driving system in the driving scenario is equivalent to determining description information of each second-level condition constraint of the autonomous driving system in the driving scenario.

FIG. 7 is a diagram of another driving scenario according to an embodiment of this application. The driving scenario shown in FIG. 7 is referred to as a driving scenario 4. In FIG. 7, it is assumed that the autonomous driving system of the first vehicle supports only single-lane cruise (that is, a lead vehicle is required to be in front of the ego vehicle, once there is no lead vehicle, a driver needs to be reminded to perform takeover, and if the driver does not perform takeover within preset duration, automatic braking is performed). For example, the plurality of second-level condition constraints include the second-level condition constraints (including the ODD boundary range, the speed difference for the function, the stable vehicle following time, the takeover time range, the speed difference in the ODD, the change in the lead vehicle, the host vehicle speed, the automatic braking, and the sensor detection) shown in FIG. 5. It is assumed that the first device determines that description information of the "ODD boundary range" in the driving scenario 4 is: at an ODD boundary (because the lead vehicle in front of the ego vehicle is changing a lane), description information of the "speed difference for a function" is: relative speed difference between two vehicles meeting activation of a function of an autonomous driving system, description information of the "steady vehicle following time" is: stable vehicle following time meeting activation of a function of an autonomous driving system, description information of the "takeover time range" is: occurrence of takeover, description information of the "speed difference in an ODD" is: relative speed difference between two vehicles being within an ODD range, description information of the "change in a lead vehicle" is: occurrence of a change causing exit from an ODD in a lead vehicle, description information of the "host vehicle speed" is: meeting a limit on an ego vehicle speed, description information of the "automatic braking" is: non-occurrence of automatic braking, and description information of the "sensor detection" is: normal.

S602: Determine a complexity degree of each of the plurality of condition constraints based on mapping information 3, where the mapping information 3 indicates a correspondence between the description information and the complexity degree.

For example, the mapping information 3 includes the correspondences shown in Table 9 to Table 17.

In an implementation, because the condition constraint includes the first-level condition constraint and the second-level condition constraint, determining the complexity degree of each of the plurality of condition constraints based on the mapping information 3 includes: determining a complexity degree of each of a plurality of second-level condition constraints based on the mapping information 3. In this case, the mapping information 3 stores a correspondence between the description information and the complexity degree of the second-level condition constraint.

The second-level condition constraint 1 is used as an example, and determining the complexity degree of the second-level condition constraint 1 based on the mapping information 3 includes: determining target description information, closest to description information of the second-level condition constraint 1 of the autonomous driving system in the driving scenario, that is of the second-level condition constraint 1 and that is in the mapping information 3, and using a complexity degree corresponding to the target description information of the second-level condition constraint 1 in the mapping information 3 as the complexity degree of the second-level condition constraint 1 in the driving scenario.

In some possible embodiments, the description information (for example, description information A) of the second-level condition constraint 1 of the autonomous driving system in the driving scenario belongs to description information preconfigured for the second-level condition constraint 1 in the mapping information 3. In this case, a complexity degree corresponding to the description information A that is of the second-level condition constraint 1 and that is found in the mapping information 3 is used as the complexity degree of the second-level condition constraint 1 in the driving scenario.

For the first vehicle (used as the host vehicle) in the driving scenario shown in FIG. 7, based on the description in FIG. 7 and the mapping information 3, it may be determined that in the driving scenario 4, a complexity degree of the second-level condition constraint "ODD boundary range" is 0.5, a complexity degree of the second-level condition constraint "change in the lead vehicle" is 1, a complexity degree of the second-level condition constraint "takeover time range" is 1, and complexity degrees of the second-level condition constraints "speed difference for a function", "stable vehicle following time", "speed difference in an ODD", "host vehicle speed", "automatic braking", and "sensor detection" are all 0.

S603: Determine a weight of each of the plurality of condition constraints, and obtain the function complexity degree of the autonomous driving system in the driving scenario by performing weighted summation on complexity degrees of the plurality of condition constraints based on weights.

A sum of the weights of the plurality of condition constraints is 1.

In an implementation, determining the weight of each of the plurality of condition constraints includes: determining the weight of each of the plurality of condition constraints based on mapping information 4, where the mapping information 4 indicates a correspondence between the condition constraint and the weight.

Further, because the condition constraint includes the first-level condition constraint and the second-level condition constraint, determining the weight of each of the plurality of condition constraints based on the mapping information 4 includes: determining a weight of each first-level condition constraint based on the mapping information 4, and then determining a weight of each corresponding second-level condition constraint based on the weight of each first-level condition constraint. In this case, the mapping information 4 stores a correspondence between the first-level condition constraint and the weight. It may be understood that a sum of weights of a plurality of second-level condition constraints corresponding to the plurality of first-level condition constraints is 1.

In some possible embodiments, the mapping information 4 may alternatively store a correspondence between the second-level condition constraint and the weight. In this case, a weight of each second-level scenario may be directly determined based on the mapping information 4. Alternatively, the mapping information 4 stores both the correspondence between the first-level condition constraint and the weight and the correspondence between the second-level condition constraint and the weight. This is not specifically limited herein.

In an implementation, the weight of the second-level condition constraint is obtained based on a weight of a first-level condition constraint corresponding to the second-level condition constraint.

In an implementation, weights of all second-level condition constraints are the same, or the weight of the second-level condition constraint is associated with a degree of impact of the second-level condition constraint on the complexity degree of the driving scenario.

For example, the weights of the plurality of second-level condition constraints may be allocated in any one of the following manners:

uniform allocation; or
non-uniform allocation performed based on degrees of impact of the plurality of first-level condition constraints on the function complexity degree of the autonomous driving system.

FIG. 5 is used as an example. It is assumed that the plurality of first-level condition constraints include the ODD boundary constraint, the function activation condition constraint, the takeover condition constraint, the ODD dependency constraint, the ego vehicle constraint, the emergency response constraint, and the sensing function limitation constraint to describe the two weight allocation manners.

Method 1: Uniform allocation

To be specific, weights of the seven first-level condition constraints: the ODD boundary constraint, the function activation condition constraint, the takeover condition constraint, the ODD dependency constraint, the ego vehicle constraint, the emergency response constraint, and the sensing function limitation constraint are all $\frac{1}{7}$. The weights of the foregoing second-level condition constraints may be further determined based on the correspondence between the first-level condition constraint and the second-level condition constraint in FIG. 5. The weight of the second-level condition constraint "ODD boundary range" is $w_{11} = \frac{1}{7}$. The weights of the two second-level condition constraints, namely, the speed difference for the function and the stable vehicle following time, are obtained through allocation based on the weight of the first-level condition constraint "function activation condition constraint", for example, $w_{21} = w_{22} = \frac{1}{14}$. The weight of the second-level condition constraint "takeover time range" is $w_{31} = \frac{1}{7}$. The weights of the two second-level condition constraints, namely, the speed difference in the ODD and the change in the lead vehicle, are obtained through allocation based on the weight of the first-level condition constraint "ODD dependency constraint", for example, $w_{41} = w_{42} = \frac{1}{14}$. The weight of the second-level condition constraint "host vehicle speed" is $w_{51} = \frac{1}{7}$. The weight of the second-level condition constraint "automatic braking" is $w_{61} = \frac{1}{7}$. The weight of the second-level condition constraint "sensor detection" is $w_{71} = \frac{1}{7}$.

In this case, weighted summation is performed, based on the determined weights, on the complexity degrees that are of the plurality of second-level condition constraints in the driving scenario and that are determined in S602, and the function complexity degree of the autonomous driving system in the driving scenario is obtained as 0.29.

Method 2: Non-uniform allocation

For example, the weights of the plurality of first-level condition constraints determined based on the degrees of impact of the plurality of first-level condition constraints on the function complexity degree of the autonomous driving system should meet the following condition: weight of the ODD boundary constraint > weight of the sensing function limitation constraint > weight of the ODD dependency constraint > weight of the ego vehicle constraint > weight of the function activation condition constraint > weight of the takeover condition constraint > weight of the emergency response constraint. A group of values of the weights of the seven first-level condition constraints are, for example, $\left\{\frac{14}{56}, \frac{12}{56}, \frac{10}{56}, \frac{8}{56}, \frac{6}{56}, \frac{4}{56}, \frac{2}{56}\right\}$ . Further, in FIG. 5, the weight of the second-level condition constraint "ODD boundary range" is $w_{11} = \frac{7}{28}$ . The weights of the two second-level condition constraints, namely, the speed difference for the function and the stable vehicle following time are obtained through allocation based on the weight of the first-level condition constraint "function activation condition constraint", for example, $w_{21} = w_{22} = \frac{3}{56}$ . The weight of the second-level condition constraint "takeover time range" is $w_{31} = \frac{1}{14}$ . The weights of the two second-level condition constraints, namely, the speed difference in the ODD and the change in the lead vehicle, are obtained through allocation based on the weight of the first-level condition constraint "ODD dependency constraint", for example, $w_{41} = w_{42} = \frac{5}{56}$ . The weight of the second-level condition constraint "host vehicle speed" is $w_{51} = \frac{1}{7}$ . The weight of the second-level condition constraint "automatic braking" is $w_{61} = \frac{1}{28}$ . The weight of the second-level condition constraint "sensor detection" is $w_{71} = \frac{6}{28}$ .

In this case, weighted summation is performed, based on the determined weights, on the complexity degrees that are of the plurality of second-level condition constraints in the driving scenario and that are determined in S602, and the function complexity degree of the autonomous driving system in the driving scenario is obtained as 0.29.

It may be understood that when any vehicle configured with an autonomous driving system in the driving scenario is used as the host vehicle, a function complexity degree of the autonomous driving system of the vehicle in the driving scenario may be assessed in the foregoing manner. For example, there are a vehicle 1 and a vehicle 2 in the driving scenario. When the vehicle 1 is used as the host vehicle, it is determined, in the foregoing manner, that a function complexity degree of an autonomous driving system of the vehicle 1 in the driving scenario is a first value. When the vehicle 2 is used as the host vehicle, it is determined, in the foregoing manner, that a function complexity degree of an autonomous driving system of the vehicle 2 in the driving scenario is a second value. If the first value is greater than the second value, it indicates that performance of the autonomous driving system of the vehicle 1 is better than performance of the autonomous driving system of the vehicle 2.

It can be learned that, in embodiments of this application, the complexity degree of the autonomous driving system is assessed through classification and subdivision in at least three dimensions: the ODD boundary constraint, the function activation condition constraint, and the takeover condition constraint, so that the function complexity degree of the autonomous driving system in the driving scenario can be appropriately and effectively assessed. In addition, the assessment method is applicable to different autonomous driving systems, and also provides a reference for performance assessment of the different autonomous driving systems.

FIG. 8 is a diagram of a structure of a compute apparatus according to an embodiment of this application. The compute apparatus 30 includes an obtaining unit 310 and a processing unit 312. The compute apparatus 30 may be implemented by hardware, software, or a combination of software and hardware.

In an implementation, the obtaining unit 310 is configured to: determine description information of each of a plurality of scenario attributes of a driving scenario. The processing unit 312 is configured to: determine a complexity degree of each of the plurality of scenario attributes based on first mapping information, where the first mapping information indicates a correspondence between the description information and the complexity degree of the scenario attribute; determine a weight of each of the plurality of scenario attributes; and obtain a complexity degree of the driving scenario by performing weighted summation on complexity degrees of the plurality of scenario attributes based on weights.

In this case, the compute apparatus 30 may be configured to implement the method described in the embodiment in FIG. 3. In the embodiment in FIG. 3, the obtaining unit 310 may be configured to perform S301, and the processing unit 312 may be configured to perform S302 and S303.

In another implementation, the obtaining unit 310 is configured to: determine description information of each of a plurality of condition constraints of an autonomous driving system in a driving scenario; and the processing unit 312 is configured to: determine a complexity degree of each of the plurality of condition constraints based on first mapping information, where the first mapping information indicates a correspondence between the description information and the complexity degree of the condition constraint; determine a weight of each of the plurality of condition constraints; and obtain a function complexity degree of the autonomous driving system in the driving scenario by performing weighted summation on complexity degrees of the plurality of condition constraints based on weights.

In this case, the compute apparatus 30 may be further configured to implement the method described in the embodiment in FIG. 6. In the embodiment in FIG. 6, the obtaining unit 310 may be configured to perform S601, and the processing unit 312 may be configured to perform S602 and S603.

It should be understood that division into the units of the foregoing compute apparatus 30 is merely logical function division. During actual implementation, all or a part of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the units in the apparatus may be implemented in a form of hardware circuit, and functions of a part or all of the units may be implemented through design of the hardware circuit. The hardware circuit may be understood as one or more processors. For example, in an implementation, the hardware circuit is an application-specific integrated circuit (application-specific integrated circuit, ASIC), and the functions of the part or all of the units are implemented through design of a logical relationship between elements in the circuit. For another example, in another implementation, the hardware circuit may be implemented by a programmable logic device (programmable logic device, PLD), for example, a field programmable gate array (field programmable gate array, FPGA). The field programmable gate array may include a large quantity of logic gate circuits, and a connection relationship between the logic gate circuits is configured based on a configuration file, to implement the functions of the part or all of the units. All the units of the apparatus may be implemented in a form of software invoked by the processor, or may be implemented in a form of hardware circuit, or a part of the units are implemented in a form of software invoked by the processor, and remaining units are implemented in a form of hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration document to implement hardware circuit configuration may be understood as a process in which the processor loads instructions to implement functions of the part or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or a part of the units of the apparatus may be integrated, or may be implemented independently. In an implementation, these units are integrated together, and implemented in a form of a system-on-a-chip (system-on-a-chip, SOC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

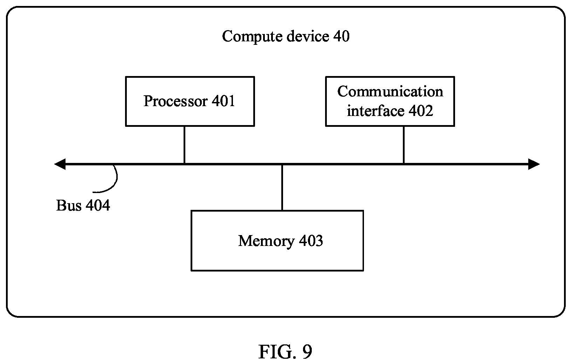

FIG. 9 is a diagram of a structure of a compute device according to an embodiment of this application. As shown in FIG. 9, a compute device 40 includes a processor 401, a communication interface 402, a memory 403, and a bus 404. The processor 401, the memory 403, and the communication interface 402 communicate with each other through the bus 404. It should be understood that a quantity of processors and a quantity of memories in the compute device 40 are not limited in this application.

In an implementation, the compute device 40 may be a network side device. The network side device may be, for example, a server (for example, a scenario assessment server or an autonomous driving system assessment server) deployed on a network side, or a component (for example, a component may be a chip or an integrated circuit) in the server, or a system-level device including a plurality of servers. The network side device may be deployed in a cloud environment or an edge environment.

In another implementation, the compute device 40 is a vehicle or a component in a vehicle, and the component may be, for example, a chip or an integrated circuit.

The bus 404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 9 to represent the bus, but it does not indicate that there is only one bus or only one type of bus. The bus 404 may include a path for transmitting information between components (for example, the memory 403, the processor 401, and the communication interface 402) of the compute device 40.

For the processor 401, refer to related descriptions of the processor in the foregoing embodiment. Details are not described herein again.

The memory 403 is configured to provide storage space, and the storage space may store data, for example, an operating system and a computer program. The memory 403 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 403 may exist independently, or may be integrated into the processor 401.

The communication interface 402 may be configured to provide an information input or output for the processor 401. Alternatively, the communication interface 402 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 402 may further include a transmitter (for example, a radio frequency transmitter or an antenna), a receiver, or the like coupled to the interface.

In some possible embodiments, the compute device 40 further includes a display (not shown in the figure). The display is connected to or coupled to the processor 401 through the bus 404. The display may be configured to display the complexity degree of the driving scenario, or configured to display the function complexity degree of the first autonomous driving system in the driving scenario. The display may be a display screen. The display screen may be a liquid crystal display (liquid crystal display, LCD), an organic or inorganic light-emitting diode (organic light-emitting diode, OLED), an active matrix organic light-emitting diode (active matrix organic light-emitting diode, AMOLED) panel, or the like. In another implementation, the display may alternatively be a head unit tablet, a vehicle-mounted display, a head-up display (head-up display, HUD) system, or the like.

The processor 401 in the compute device 40 is configured to read the computer program stored in the memory 403, to perform the foregoing method, for example, the method described in FIG. 3 or FIG. 6.

In a possible design manner, the compute device 40 may be one or more modules in an entity for executing the method shown in FIG. 3. The processor 401 may be configured to read one or more computer programs stored in the memory, to perform the following operations:

determine description information of each of a plurality of scenario attributes of a driving scenario by using the obtaining unit 310; and

determining a complexity degree of each of the plurality of scenario attributes based on first mapping information, where the first mapping information indicates a correspondence between the description information and the complexity degree of the scenario attribute; determining a weight of each of the plurality of scenario attributes; and obtaining a complexity degree of the driving scenario by performing weighted summation on complexity degrees of the plurality of scenario attributes based on weights. In a possible design manner, the compute device 40 may be one or more modules in an entity for executing the method shown in FIG. 6. The processor 401 may be configured to read one or more computer programs stored in the memory, to perform the following operations:

determining description information of each of a plurality of condition constraints of an autonomous driving system in a driving scenario by using the obtaining unit 310; and

determining a complexity degree of each of the plurality of condition constraints based on first mapping information, where the first mapping information indicates a correspondence between the description information and the complexity degree of the condition constraint; determining a weight of each of the plurality of condition constraints; and obtaining a function complexity degree of the autonomous driving system in the driving scenario by performing weighted summation on complexity degrees of the plurality of condition constraints based on weights.

In the foregoing embodiments in this specification, the descriptions of embodiments have respective focuses. For a part that is not described in detail in an embodiment, refer to related descriptions in other embodiments. In addition, in embodiments of this application, unless otherwise specified or there is a logic conflict, terms and/or descriptions in embodiments are consistent and may be mutually referenced, and technical features in different embodiments may be combined based on an internal logical relationship thereof, to form a new embodiment.

It should be noted that, a person of ordinary skill in the art may understand that, all or a part of the steps in methods of the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM) or another optical disc memory, a magnetic disk memory, a magnetic tape memory, or any other computer-readable medium that can be configured to carry or store data.

The technical solutions of this application essentially, or the contributing part, or all or a part of the technical solutions may be implemented in a form of software product. The computer program product is stored in a storage medium and includes several instructions for enabling a device (which may be a personal computer, a server, a network device, a robot, a single-chip microcomputer, a chip, a robot, or the like) to perform all or a part of the steps of the methods in embodiments of this application.

**Claims**

1. A method for determining a scenario complexity degree, wherein the method comprises:

   determining description information of each of a plurality of scenario attributes of a driving scenario;
   determining a complexity degree of each of the plurality of scenario attributes based on first mapping information, wherein the first mapping information indicates a correspondence between the description information and the complexity degree;
   determining a weight of each of the plurality of scenario attributes; and
   obtaining a complexity degree of the driving scenario by performing weighted summation on complexity degrees of the plurality of scenario attributes based on the weights.

2. The method according to claim 1, wherein determining the weight of each of the plurality of scenario attributes comprises:
   determining the weight of each of the plurality of scenario attributes based on second mapping information, wherein the second mapping information indicates a correspondence between the scenario attribute and the weight.

3. The method according to claim 1 or 2, wherein a sum of the weights of the plurality of scenario attributes is 1.

4. The method according to any one of claims 1 to 3, wherein the plurality of scenario attributes comprise a plurality of items of a road, weather, an environment, a host vehicle, and connectivity.

5. The method according to any one of claims 1 to 4, wherein the scenario attribute comprises a first-level scenario attribute and a second-level scenario attribute; and when the first-level scenario attribute is the road, the second-level scenario attribute is at least one of a road structure, a lane line, and a slope, when the first-level scenario attribute is the weather, the second-level scenario attribute comprises a weather type, when the first-level scenario attribute is the environment, the second-level scenario attribute is at least one of a traffic sign, a temporary traffic event, a type of a traffic participant, and a quantity of traffic participants, when the first-level scenario attribute is the host vehicle, the second-level scenario attribute comprises a host vehicle speed, and when the first-level scenario attribute is the connectivity, the second-level scenario attribute comprises a connectivity information type.

6. The method according to any one of claims 1 to 5, wherein the weights of all the scenario attributes are the same, or the weight of the scenario attribute is associated with a degree of impact of the scenario attribute on the complexity degree of the driving scenario.

7. A method for determining a function complexity degree of an autonomous driving system, wherein the method comprises:

   determining description information of each of a plurality of condition constraints of the autonomous driving system in a driving scenario;
   determining a complexity degree of each of the plurality of condition constraints based on first mapping information, wherein the first mapping information indicates a correspondence between the description information and the complexity degree;

determining a weight of each of the plurality of condition constraints; and
obtaining the function complexity degree of the autonomous driving system in the driving scenario by performing weighted summation on complexity degrees of the plurality of condition constraints based on the weights.

8. The method according to claim 7, wherein determining the weight of each of the plurality of condition constraints comprises:
determining the weight of each of the plurality of condition constraints based on second mapping information, wherein the second mapping information indicates a correspondence between the condition constraint and the weight.

9. The method according to claim 7 or 8, wherein a sum of the weights of the plurality of condition constraints is 1.

10. The method according to any one of claims 7 to 9, wherein the plurality of condition constraints comprise a plurality of items of an operational design domain ODD boundary constraint, a function activation condition constraint, a takeover condition constraint, an ODD dependency constraint, an ego vehicle constraint, an emergency response constraint, and a sensing function limitation constraint.

11. The method according to any one of claims 7 to 10, wherein the condition constraint comprises a first-level condition constraint and a second-level condition constraint; and when the first-level condition constraint is the operational design domain ODD boundary constraint, the second-level condition constraint comprises an ODD boundary range, when the first-level condition constraint is the function activation condition constraint, the second-level condition constraint is at least one of a speed difference for a function and stable vehicle following time, when the first-level condition constraint is the takeover condition constraint, the second-level condition constraint comprises a takeover time range, when the first-level condition constraint is the ODD dependency constraint, the second-level condition constraint is at least one of a speed difference in an ODD and a change in a lead vehicle, when the first-level condition constraint is the ego vehicle constraint, the second-level condition constraint is at least one of a host vehicle speed, an occupant fatigue status, and a vehicle function status, when the first-level condition constraint is the emergency response constraint, the second-level condition constraint comprises automatic braking, and when the first-level condition constraint is the sensing function limitation constraint, the second-level condition constraint comprises sensor detection.

12. The method according to any one of claims 7 to 11, wherein the weights of all the condition constraints are the same, or the weight of the condition constraint is associated with a degree of impact of the condition constraint on the function complexity degree of the autonomous driving system.

13. An apparatus for determining a scenario complexity degree, wherein the apparatus comprises:

an obtaining unit, configured to determine description information of each of a plurality of scenario attributes of a driving scenario; and
a processing unit, configured to determine a complexity degree of each of the plurality of scenario attributes based on first mapping information, wherein the first mapping information indicates a correspondence between the description information and the complexity degree;
the processing unit is further configured to determine a weight of each of the plurality of scenario attributes; and
the processing unit is further configured to obtain a complexity degree of the driving scenario by performing weighted summation on complexity degrees of the plurality of scenario attributes based on the weights.

14. The apparatus according to claim 13, wherein the processing unit is specifically configured to:
determine the weight of each of the plurality of scenario attributes based on second mapping information, wherein the second mapping information indicates a correspondence between the scenario attribute and the weight.

15. The apparatus according to claim 13 or 14, wherein a sum of the weights of the plurality of scenario attributes is 1.

16. The apparatus according to any one of claims 13 to 15, wherein the plurality of scenario attributes comprise a plurality of items of a road, weather, an environment, a host vehicle, and connectivity.

17. The apparatus according to any one of claims 13 to 16, wherein the scenario attribute comprises a first-level scenario attribute and a second-level scenario attribute, and when the first-level scenario attribute is the road, the second-level scenario attribute is at least one of a road structure, a lane line, and a slope; when the first-level scenario attribute is the weather, the second-level scenario attribute comprises a weather type; when the first-level scenario attribute is the environment, the second-level scenario attribute is at least one of a traffic sign, a temporary traffic event, a type of a traffic participant, and a quantity of traffic participants; when the first-level scenario attribute is the host vehicle, the second-level scenario attribute comprises a host vehicle speed; and when the first-level scenario attribute is the connectivity, the second-level scenario attribute comprises a connectivity information type.

18. The apparatus according to any one of claims 13 to 17, wherein the weights of all the scenario attributes are the same, or the weight of the scenario attribute is associated with a degree of impact of the scenario attribute on the complexity degree of the driving scenario.

19. An apparatus for determining a function complexity degree of an autonomous driving system, wherein the apparatus comprises:

an obtaining unit, configured to determine description information of each of a plurality of condition constraints of the autonomous driving system in a driving scenario; and

a processing unit, configured to determine a complexity degree of each of the plurality of condition constraints based on first mapping information, wherein the first mapping information indicates a correspondence between the description information and the complexity degree;

the processing unit is further configured to determine a weight of each of the plurality of condition constraints; and

the processing unit is further configured to obtain the function complexity degree of the autonomous driving system in the driving scenario by performing weighted summation on complexity degrees of the plurality of condition constraints based on the weights.

20. The apparatus according to claim 19, wherein the processing unit is specifically configured to:

determine the weight of each of the plurality of condition constraints based on second mapping information, wherein the second mapping information indicates a correspondence between the condition constraint and the weight.

21. The apparatus according to claim 19 or 20, wherein a sum of the weights of the plurality of condition constraints is 1.

22. The apparatus according to any one of claims 19 to 21, wherein the plurality of condition constraints comprise a plurality of items of an operational design domain ODD boundary constraint, a function activation condition constraint, a takeover condition constraint, an ODD dependency constraint, an ego vehicle constraint, an emergency response constraint, and a sensing function limitation constraint.

23. The apparatus according to any one of claims 19 to 22, wherein the condition constraint comprises a first-level condition constraint and a second-level condition constraint; and when the first-level condition constraint is the operational design domain ODD boundary constraint, the second-level condition constraint comprises an ODD boundary range, when the first-level condition constraint is the function activation condition constraint, the second-level condition constraint is at least one of a speed difference for a function and stable vehicle following time; when the first-level condition constraint is the takeover condition constraint, the second-level condition constraint comprises a takeover time range, when the first-level condition constraint is the ODD dependency constraint, the second-level condition constraint is at least one of a speed difference in an ODD and a change in a lead vehicle, when the first-level condition constraint is the ego vehicle constraint, the second-level condition constraint is at least one of a host vehicle speed, an occupant fatigue status, and a vehicle function status, when the first-level condition constraint is the emergency response constraint, the second-level condition constraint comprises automatic braking, and when the first-level condition constraint is the sensing function limitation constraint, the second-level condition constraint comprises sensor detection.

24. The apparatus according to any one of claims 19 to 23, wherein the weights of all the condition constraints are the same, or the weight of the condition constraint is associated with a degree of impact of the condition constraint on the function complexity degree of the autonomous driving system.

25. A communication apparatus, wherein the apparatus comprises at least one processor and an interface circuit, and the processor is configured to execute instructions and/or exchange data by using the interface circuit, so that the apparatus performs the method according to any one of claims 1 to 12.

26. A vehicle, wherein the vehicle comprises the apparatus according to any one of claims 13 to 24.

27. A computer-readable storage medium, comprising computer instructions, wherein when the computer instructions are run by a processor, the method according to any one of claims 1 to 12 is implemented.

Data source device — First device

FIG. 1

First-level
scenario
attribute

Second-level scenario
attribute

Weight

Road

Road structure — $W_{11}$

Lane line — $W_{12}$

Slope — $W_{13}$

...

Weather

Weather type — $W_{21}$

...

Scenario
complexity
degree
assessment

Environment

Traffic sign — $W_{31}$

Temporary traffic event — $W_{32}$

Type of a traffic participant — $W_{33}$

Quantity of traffic participants — $W_{34}$

...

Host vehicle

Host vehicle speed — $W_{41}$

...

Connectivity

Connectivity
information type — $W_{51}$

...

FIG. 2

S301: Determine description information of each of a plurality of scenario attributes of a driving scenario

S302: Determine a complexity degree of each of the plurality of scenario attributes based on mapping information 1, where the mapping information 1 indicates a correspondence between the description information and the complexity degree

S303: Determine a weight of each of the plurality of scenario attributes, and obtain a complexity degree of the driving scenario by performing weighted summation on complexity degrees of the plurality of scenario attributes based on weights

FIG. 3

Vehicle 1 (host vehicle)
60 km/h

FIG. 4A

FIG. 4B

Vehicle 1 (host vehicle) 60 km/h

Vehicle 1 (host vehicle)
60 km/h

Ice

FIG. 4C

FIG. 5

S601: Determine description information of each of a plurality of condition constraints of an autonomous driving system in a driving scenario

S602: Determine a complexity degree of each of the plurality of condition constraints based on mapping information 3, where the mapping information 3 indicates a correspondence between the description information and the complexity degree

S603: Determine a weight of each of the plurality of condition constraints, and obtain a function complexity degree of the autonomous driving system in the driving scenario by performing weighted summation on complexity degrees of the plurality of condition constraints based on weights

FIG. 6

First vehicle
(host vehicle)

Lead vehicle

FIG. 7

Compute apparatus 30

Obtaining unit 310 — Processing unit 312

FIG. 8

Compute device 40

Processor 401

Communication interface 402

Bus 404

Memory 403

FIG. 9

## INTERNATIONAL SEARCH REPORT

| International application No. |
| --- |
| **PCT/CN2023/121735** |

**A.    CLASSIFICATION OF SUBJECT MATTER**

G06F18/20(2023.01)i

According to International Patent Classification (IPC) or to both national classification and IPC

**B.    FIELDS SEARCHED**

Minimum documentation searched (classification system followed by classification symbols)

IPC：G06F18/-

Documentation searched other than minimum documentation to the extent that such documents are included in the fields searched

Electronic data base consulted during the international search (name of data base and, where practicable, search terms used)

CNABS, CNTXT, WPABSC, ENTXTC, CNKI, 万方, WANFANG: 华为, 刘建琴, 自动, 智能, 驾驶, 车辆, 场景, 道路, 天气, 环境, 交通, 复杂度, 权重, 功能, 性能, 测试, 确定, 评估, 评价, 设计运行范围, 设计运行域, 激活, 接管; VEN, ENTXT, IEEE: huawei, liu jianqin, auto+, intelligent+, driving, traveling, vehicle, scenario, complexit+, weight+, road, weather, environment, traffic, function?, performance, test+, determin+, evaluat+, ODD, activat+, take over

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113109055 A (SAIC MOTOR CORP., LTD.) 13 July 2021 (2021-07-13) description, paragraphs [0047]-[0058] | 1-6, 13-18, 25-27 |
| X | CN 116109188 A (PURPLE MOUNTAIN LABORATORIES FOR NETWORK AND COMMUNICATION SECURITY) 12 May 2023 (2023-05-12) description, paragraphs [0021]-[0025] | 7-12, 19-27 |
| X | US 2023050063 A1 (HUAWEI TECHNOLOGIES CO., LTD.) 16 February 2023 (2023-02-16) claims 1-7 | 1-6, 13-18, 25-27 |
| A | CN 115470118 A (CHINA AUTOMOTIVE INNOVATION CORP.) 13 December 2022 (2022-12-13) entire document | 1-27 |
| A | CN 115376324 A (CHINA AUTOMOTIVE TECHNOLOGY AND RESEARCH CENTER CO., LTD.) 22 November 2022 (2022-11-22) entire document | 1-27 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 May 2024** | **18 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/121735**

| Patent document cited in search report | | | Publication date (day/month/year) | Patent family member(s) | | | Publication date (day/month/year) |
|---|---|---|---|---|---|---|---|
| CN | 113109055 | A | 13 July 2021 | None | | | |
| CN | 116109188 | A | 12 May 2023 | None | | | |
| US | 2023050063 | A1 | 16 February 2023 | EP | 4120180 | A1 | 18 January 2023 |
| | | | | EP | 4120180 | A4 | 25 January 2023 |
| | | | | WO | 2021195955 | A1 | 07 October 2021 |
| | | | | CN | 112740295 | A | 30 April 2021 |
| | | | | CN | 112740295 | B | 10 May 2022 |
| CN | 115470118 | A | 13 December 2022 | None | | | |
| CN | 115376324 | A | 22 November 2022 | CN | 115376324 | B | 24 March 2023 |

Form PCT/ISA/210 (patent family annex) (July 2022)